# EUROPÄISCHE PATENTSCHRIFT

(11) **EP 4 684 234 B1**
(45) Veröffentlichungstag und Bekanntmachung des Hinweises auf die Patenterteilung: **18.11.2026**
(21) Anmeldenummer: 24710396.3
(22) Anmeldetag: 07.03.2024
(51) Int. Cl.: G01S 15/42, G01S 7/524, G01S 15/10, G01S 15/87, G01S 15/931

(54) **SYSTEM ZUR ULTRASCHALLBASIERTEN OBJEKTERKENNUNG**
SYSTEM FOR ULTRASOUND-BASED OBJECT DETECTION
SYSTÈME DE RECONNAISSANCE D'OBJETS PAR VOIE ULTRASONORE

(30) Priorität: 23.03.2023 DE 102023107269
(43) Veröffentlichungstag der Anmeldung: 28.01.2026
(73) Patentinhaber: Valeo Schalter und Sensoren GmbH, 74321 Bietigheim-Bissingen (DE)
(72) Erfinder: STARKLOFF, Henrik, 74321 Bietigheim-Bissingen (DE)
(74) Vertreter: Pothmann, Karsten
(86) Internationale Anmeldenummer: PCT/EP2024/056032
(87) Internationale Veröffentlichungsnummer: WO 2024/194032

(56) Entgegenhaltungen:
- WO-A1-2014/097479
- DE-A1- 102016 224 928
- DE-A1- 102019 127 859

## Beschreibung

### GEBIET DER TECHNIK

Die Erfindung betrifft ein System zur Auswertung von Ultraschallechos, um Objekte zu erkennen. Derartige Systeme kommen beispielsweise bei Kraftfahrzeugen zum Einsatz, um Zusammenstöße zu verhindern.

### STAND DER TECHNIK

Im Stand der Technik sind Ultraschallmesssysteme bekannt, welche die Reflektionen von Ultraschallwellen auswerten, um bewegte oder unbewegte Objekte zu erkennen.

Beispielsweise beschreibt das deutsche Patent DE 11 2018 001 826 B3 eine Objekterkennung mittels Ultraschalls für Fahrzeuge. Die deutsche Patentanmeldung DE 102012222891 A1 beschreibt ein Fahrassistenzsystem, welches Ultraschall-Sensoren nutzt. Derartige Systeme können z.B. im Zusammenhang mit Parkhilfen oder Systemen zur Unfallvermeidung eingesetzt werden.

Der gleichzeitige Betrieb mehrerer Sensoren zur Verbesserung der räumlichen Auflösung ist oftmals nicht ohne weiteres möglich oder führt nicht zur erhofften Verbesserung der Objekterkennung, da die Signale des einen Sensors auch im benachbarten Sensor messbar sind (Kreuzechoproblematik).

Um die Ultraschallsignale der verschiedenen Ultraschallsensoren unterscheidbar zu machen, schlägt die deutsche Patentschrift DE 10 2017 123 049 B3 vor, der Hüllkurve von Ultraschallpulspaketen verschiedener Sender unterschiedlich verlaufende Frequenzänderungen aufzumodulieren. Weitere Ultraschallmesssysteme sind aus DE 10 2016 224928 A1, WO 2014/097479 A1 und aus DE 10 2019 127859 A1 bekannt.

Es ist eine Aufgabe der Erfindung, ein verbessertes Verfahren und ein verbessertes System zur ultraschallbasierten Objekterkennung bereitzustellen. Die der Erfindung zugrunde liegenden Aufgaben werden durch die Merkmale der unabhängigen Ansprüche gelöst. Vorteilhafte Ausführungsformen sind in den abhängigen Patentansprüchen beschrieben.

### ZUSAMMENFASSUNG

Der Gegenstand der Erfindung wird durch die unabhängigen Ansprüche definiert.

In einem Aspekt ist ein System zur ultraschallbasierten Objekterkennung offenbart. Das System umfasst mehrere Ultraschallempfänger und eine Auswerteeinheit. Die Ultraschallempfänger sind dazu konfiguriert, Ultraschallechos mindestens zweier unterschiedlicher Frequenzen zu empfangen. Die Auswerteeinheit ist dazu konfiguriert, zyklisch eine Einkanal-Objekterkennung durchzuführen. Die Einkanal-Objekterkennung ist eine Objekterkennung, die eine Analyse des Ultraschallechos einer der Frequenzen zur Erkennung eines Objekts umfasst, wobei im Laufe der Einkanal-Objekterkennung für mehrere der Zyklen die mehreren Frequenzen alternierend gemäß eines vordefinierten Schemas verwendet werden. Die Auswerteeinheit ist ferner dazu konfiguriert, in mehreren der Zyklen jeweils pro Zyklus eine Mehrkanal-Objekterkennung durchzuführen. Die Mehrkanal-Objekterkennung ist eine Objekterkennung, die eine Analyse der Ergebnisse der aktuell durchgeführten Einkanal-Objekterkennung und mindestens einer weiteren in der Vergangenheit durchgeführten Einkanal-Objekterkennung im Ultraschallecho einer anderen der mehreren Frequenzen mit dem Ziel der Erkennung des Objekts umfasst. Die Auswerteeinheit ist ferner dazu konfiguriert, das Ergebnis der Mehrkanal-Objekterkennung als das Ergebnis der ultraschallbasierten Objekterkennung des aktuellen Zyklus auszugeben.

Die Verwendung mehrerer verschiedener Frequenzen für die Objekterkennung kann den Vorteil haben, dass die Qualität der Objekterkennung verbessert werden kann, da unterschiedliche Objekte bei unterschiedlichen Frequenzen teils unterschiedliche Schallreflektionscharakteristika aufweisen und/oder weil in der Umgebung auf bestimmten Frequenzen Störechos existieren, welche in anderen Frequenzen nicht oder deutlich schwächer vorhanden sind. Andererseits kann die Verwendung mehrerer Frequenzen auch Probleme schaffen, z.B. Kreuzechos oder eine Inkompatibilität mit bisher verwendeten Objekterkennungsalgorithmen, die auf die Auswertung von Echos einer bestimmten Frequenz angelegt sind. Die Anmelderin hat beobachtet, dass die mit der Verwendung mehrerer verschiedener Frequenzen einhergehenden Probleme dadurch vermieden oder zumindest reduziert werden können, dass die Objekterkennung für verschiedene Ultraschallechofrequenzen auf frequenzspezifische Weise durchgeführt wird (Einkanal-Objekterkennung), wobei die Ergebnisse mehrerer Kanäle bei der Berechnung eines Endergebnisses bezüglich des Vorhandenseins eines Objekts berücksichtigt werden. Ausführungsformen der Erfindung können also den Vorteil haben, dass die Vorteile der Verwendung mehrerer unterschiedlicher Frequenzen für die Objekterkennung genutzt werden können, ohne dass das "flackernde" Erkennen von Objekten insbesondere am Rande der Schallkeulen zu Problemen bei der Objekterkennung führen. Zu den Vorteilen der Verwendung mehrerer unterschiedlicher Frequenzen gehören insbesondere die erhöhte Robustheit der Objekterkennung gegenüber falsch-positiven Objekterkennungsergebnissen.

Ein weiterer Vorteil der Durchführung mehrerer Einkanal-Objekterkennungen in Verbindung mit einer Mehrkanal-Objekterkennung kann die Reduktion der Störanfälligkeit (insb. fehlerhafte Objekterkennungsfehler wegen Kreuzechos) sein. Derartige Fehler treten z.B. insbesondere bei auf Frequenzmodulation beruhenden Verfahren auf. Außerdem weisen die Schallkeulen von Ultraschallsignalen unterschiedlicher Frequenzen unterschiedliche Dimensionen und Reflektions-Charakteristika auf, was die Objekterkennung insbesondere an den Rändern der jeweiligen Schallkeulen erheblich erschwert und teils unmöglich machen kann. Ausführungsformen des hier beschriebenen Systems bzw. Verfahren zur Objekterkennung weisen diese Probleme nicht oder in einem verringerten Maße auf.

Eine frequenzbezogene Objekterkennung kann z.B. dadurch bewirkt werden, dass entsprechende Sender Ultraschallsequenzen der entsprechenden Frequenz zeitlich alternierend emittieren und auch die Echosignalanalyse sich ausschließlich auf die Echos der gerade aktiven Frequenz bezieht. Alternativ können Frequenzfilter verwendet werden, um sicherzustellen, dass bei der Durchführung der Einkanal-Objekterkennung nur die Echosignale einer bestimmten Frequenz berücksichtigt werden. Somit kann der negative Effekt von Kreuzechos während der Einkanal-Objekterkennung vermieden werden. Die Anmelderin hat beobachtet, dass es aufgrund der unterschiedlichen Schallkeulencharakteristika verschiedener Signalfrequenzen zu anderen Problemen bei der Objekterkennung kommen kann. Insbesondere kann es bei Objekten am Rande der Schallkeulen vorkommen, dass diese Objekte nur noch bei der Auswertung von Echosignalen einer bestimmten Frequenz erkannt werden können, nicht jedoch bei der Auswertung von Echosignalen anderer Frequenzen. Es kommt zu einer "flackernden" bzw. widersprüchlichen Objekterkennung bei Verwendung mehrerer verschiedener Frequenzen bzw. Kanäle. Diese Problematik kann jedoch erfolgreich dadurch überwunden werden, dass für die Berechnung, ob ein Objekt erkannt wurde oder nicht, die Ergebnisse der Einkanal-Objekterkennung von zwei oder mehreren der Kanäle berücksichtigt werden. Da die Kanäle sukzessiv alternierend verwendet werden, umfasst die Mehrkanal-Objekterkennung also mindestens einen in der Vergangenheit liegenden Zyklus bzw. mindestens eine in der Vergangenheit liegende Einkanal-Objekterkennung. Die Mehrkanal-Objekterkennung kann in manchen Implementierungsvarianten jedoch auch mehrere in der Vergangenheit liegende Zyklen jeweils von zwei oder mehreren der vordefinierten Frequenzen umfassen.

Somit können auch Objekte, die am Rande der Schallkeule einer oder mehrerer der Frequenzen liegen, durch Berücksichtigung der Ergebnisse von ein oder mehreren Objekterkennungen in anderen Kanälen/Frequenzen zuverlässig erkannt werden.

Vorzugsweise entspricht jede der mehreren Frequenzen einem entsprechenden Kanal.

Das System kann beispielsweise mehrere Ultraschallsender umfassen, wobei die mehreren Ultraschallsender dazu konfiguriert sind, Ultraschallsignale zu emittieren, wobei die Ultraschallechos aufgrund einer Reflektion der Ultraschallsignale von dem Objekt resultieren.

Das System kann beispielsweise mehrere Ultraschallsender umfassen, wobei die mehreren Ultraschallsender dazu konfiguriert sind, Ultraschallsignale einer ersten der mehreren Frequenzen und einer zweiten der mehreren Frequenzen zu emittieren, wobei die Ultraschallechos aufgrund einer Reflektion von dem Objekt aus den Ultraschallsignalen resultieren.

Die mehreren Ultraschallsender können beispielsweise jeweils dazu konfiguriert sein, die Ultraschallsignale einer einzelnen spezifischen der mehreren unterschiedlichen Frequenzen zu emittieren. Beispielsweise können die Ultraschallsender einen oder mehrere Sender umfassen, die ausschließlich Ultraschallsignale einer ersten Frequenz emittieren, und einen oder mehrere weitere Sender umfassen, die ausschließlich Ultraschallsignale einer zweiten Frequenz emittieren. Optional können die Ultraschallsender auch einen oder mehrere weitere Sender umfassen, die ausschließlich Ultraschallsignale einer n-ten Frequenz emittieren, wobei n z.B. 3, 4, 5 oder eine höhere Ganzzahl sein kann.

Gemäß manchen Beispielen sind die mehreren Ultraschallsender dazu konfiguriert, zyklisch alternierend die Ultraschallsignale unterschiedlicher der mehreren unterschiedlichen Frequenzen zu emittieren, wobei pro Zyklus immer nur Signale einer der mehreren unterschiedlichen Frequenzen emittiert werden.

Dies kann vorteilhaft sein, da Kreuzechos vermieden werden, denn zu einem beliebigen Zeitpunkt werden immer nur Ultraschallsignale einer der mehreren Frequenzen emittiert. Außerdem kann diese Variante bautechnisch einfacher realisierbar sein, da auf Frequenzfilter für die ausschließliche Auswertung von Echos einer bestimmten Frequenz verzichtet werden kann. Diese Beispiele sind zudem besonders exakt, da sich auch mit Frequenzfiltern Probleme, die durch Kreuzechos bei der Objekterkennung entstehen können, oft nicht völlig ausschließen lassen.

Gemäß anderer Beispiele werden zwei oder mehrere der Sender, die jeweils Ultraschallsignale unterschiedlicher Frequenzen emittieren, gleichzeitig betrieben. In diesem Fall ist das System dazu konfiguriert, zyklisch alternierend Frequenzfilter zu verwenden, sodass bei der alternierenden Einkanal-Objekterkennung pro Zyklus immer nur die Ultraschallechos einer der Frequenzen berücksichtigt und die Echos anderer Frequenzen herausgefiltert werden.

Bei den Frequenzfiltern kann es sich z.B. um sog. "Optimalfilter" (englisch matched filter) handeln, die das Auftreten vorbestimmter Signalobjekte detektieren und/oder Signale bestimmter Frequenzbereiche komplett oder weitgehend herausfiltern. Beispielsweise können diese Filter das Signal-Rauschverhältnis (engl. signal to noise ratio, SNR) optimieren. Ein Optimalfilter dient zur optimalen Bestimmung des Vorhandenseins (Detektion) einer bekannten Signalform, des vorbestimmten Signalobjekts, in Gegenwart von Störungen (Parameterschätzung). Diese Störungen können beispielsweise Signale anderer Ultraschallsender, Echos außerhalb bestimmter Frequenzbereiche und/oder Bodenechos sein.

Gemäß manchen Beispielen umfasst das System ferner eine Kontrolleinheit. Die Kontrolleinheit ist dazu konfiguriert, die mehreren Ultraschallsender im Laufe der mehreren Zyklen alternierend zum Senden der Ultraschallsignale mit einem Sendeschema anzusteuern, sodass innerhalb eines der Zyklen vorzugsweise immer nur Ultraschallsignale einer einzigen der mehreren unterschiedlichen Frequenzen gleichzeitig emittiert werden. Das für die Analyse verwendete vordefinierte Schema entspricht dem Sendeschema.

Beispielsweise kann das Sendeschema vorsehen, dass 3 Sekunden lang nur Ultraschallsignale der ersten Frequenz emittiert werden und in dieser Zeit eine Einkanal-Objekterkennung nur auf Basis der Ultraschallechos der ersten Frequenz durchgeführt wird. Danach werden 3 Sekunden lang nur Ultraschallsignale der zweiten Frequenz emittiert und in dieser Zeit eine Einkanal-Objekterkennung nur auf Basis der Ultraschallechos der zweiten Frequenz durchgeführt. Danach können wieder 3 Sekunden lang nur Ultraschallsignale der ersten Frequenz emittiert und analysiert werden, oder, falls eine dritte bzw. weitere (n-te) Frequenzen vom System bzw. den Sendern unterstützt werden, können 3 Sekunden lang nur Ultraschallsignale der dritten (n-ten) Frequenz emittiert und in dieser Zeit eine Einkanal-Objekterkennung nur auf Basis der Ultraschallechos der dritten (n-ten) Frequenz durchgeführt werden.

Dies kann vorteilhaft sein, da auf Kreuzechos beruhende Probleme bei der Objekterkennung komplett vermieden werden können. Zudem sind keine Frequenzfilter erforderlich, um eine frequenzspezifische Einkanal-Objekterkennung zu ermöglichen.

Gemäß manchen Beispielen sind die mehreren vordefinierten Frequenzen, z.B. F1, F2 und/oder F3, nicht während eines gesamten Ausstrahlungszyklus konstant. Vielmehr können die Ultraschallsignale, die während eines Zyklus/während der Kanal einer bestimmten Frequenz aktiv ist ausgesendet werden, frequenzmoduliert sein, z.B. indem Ultraschall-Bursts mit ansteigender Frequenz während des Bursts gesendet werden (sogenanntes Chirp-Up), oder indem Ultraschall-Bursts mit absteigender Frequenz während des Bursts gesendet werden (Chirp-Down). Dies kann es der Auswerteeinheit zusätzlich erleichtern, die ersten und zweiten Frequenzen voneinander und auch von Störsignalen/Bodenechos zu unterschieden.

Beispielsweise können die Ultraschallechos der mehreren unterschiedlichen Frequenzen frequenzmoduliert sein und das Modulationsmuster der verschiedenen Frequenzen kann unterschiedlich sein, wobei die Auswerteeinheit dazu konfiguriert ist, die Unterschiede in der Frequenzmodulation zur Unterscheidung der zu den verschiedenen Frequenzen gehörenden Echos zu verwenden. Dies kann z.B. hilfreich sein, falls mehrere Sender, die Ultraschallsignale der verschiedenen Frequenzen emittieren, gleichzeitig aktiv sind und während der zyklischen Analyse der Echosignale immer nur einer Frequenz bzw. eines Kanals die Echos der anderen Frequenzen bzw. Kanäle herausgefiltert werden.

Erfindungsgemäß umfassen die mehreren verschiedenen Frequenzen zumindest eine erste Frequenz und eine zweite Frequenz, wobei die erste Frequenz niedriger ist als die zweite Frequenz.

Die Unterschallsignale der verschiedenen Frequenzen können sich ggf. auch im Hinblick auf weitere Eigenschaften unterscheiden, z.B. im Hinblick auf die Signalamplitude und/oder die Dimension (räumliche Abmessungen) der Ultraschallkeule. Beispielsweise können die Ultraschallsignale der ersten Frequenz Schallkeulen haben, deren Form sich von der Form der Schallkeulen der Ultraschallsignale der zweiten Frequenz unterscheidet.

Beispielsweise können die Sender für die Ultraschallsignale der ersten und für die Ultraschallsignale der zweiten Frequenz so angeordnet und ausgerichtet sein, dass die zentralen Achsen der Schallkeulen der Ultraschallsignale der ersten Frequenz und die der Schallkeulen der Ultraschallsignale der zweiten Frequenz völlig oder näherungsweise deckungsgleich angeordnet sind (z.B. Abstand der Achsen voneinander ist kleiner als 20% des Durchmessers der größten der alignierten Schallkeulen, vorzugsweise kleiner als 10% des Durchmessers der größten der alignierten Schallkeulen). Das hat den Vorteil, dass die Echosignale, die ein Objekt emittiert, im Wesentlichen im gleichen Winkel emittiert werden, was die Objekterkennung erleichtert. Falls die Echokeulen der verschiedenen Frequenzen jedoch unterschiedlich lang und/oder breit sind, können Objekte am Rand dieser Schallkeulen ggf. nicht mehr auf Basis aller Frequenzen gut erkannt werden.

Die Anmelderin hat beobachtet, dass Ultraschallsignale bzw. Echos niedrigerer Frequenzen besonders sensitiv sind und oftmals die Gegenwart von Objekten auch dann noch erkennen können, wenn die Amplitude des Echos dieses Objekts bei Ultraschallsignalen höherer Frequenz nicht mehr vom Hintergrundrauschen bzw. dem Echo des Bodens unterscheidbar ist. Das System bzw. die Auswerteeinheit ist vorzugsweise dazu konfiguriert, das Nichterkennen des Objekts bei der Einkanal-Objekterkennung auf Basis der ersten (also der niedrigeren) Frequenz als verlässlicheren Indikator der Abwesenheit dieses Objekts zu werden als das Nichterkennen des Objekts im Zuge der Einkanal-Objekterkennung auf Basis der zweiten (also der höheren) Frequenz.

Als Ultraschall wird hier Schall mit Frequenzen oberhalb des Hörfrequenzbereichs des Menschen bezeichnet. Er umfasst insbesondere Frequenzen ab 20 kHz, insbesondere den Frequenzbereich 20kHz bis 1 GHz.

Vorzugsweise unterscheidet sich jede der unterschiedlichen Frequenzen von der ihr am nächsten kommenden Frequenz um mindestens 1 kHz, z.B. um mindestens 2 kHz, z.B. um mindestens 3 kHz, und insbesondere mindestens 4 kHz. Insbesondere kann dieser Frequenzunterschied ca. 5 kHz bis 7 kHz betragen, z.B. etwa 6 kHz. Beispielsweise kann die erste Frequenz 47kHz sein und die zweite Frequenz kann 53kHz betragen.

In manchen Beispielen handelt es sich bei den mehreren unterschiedlichen Frequenzen um statisch konstante Frequenzen. Das bedeutet, dass - solange ein oder mehrere Ultraschallsender Ultraschallsignale dieser Frequenz ausstrahlen - diese Frequenz im Wesentlichen konstant bleibt.

In anderen Beispielen handelt es sich bei den mehreren unterschiedlichen Frequenzen um frequenzmodulierte Frequenzen. Das bedeutet, dass - während ein oder mehrere Ultraschallsender Ultraschallsignale dieser Frequenz ausstrahlen - diese Frequenz auf vordefinierte Weise verändert wird, z.B. gemäß eines "Chirp-up" oder "Chirp-down" Verfahrens. Vorzugsweise beträgt die maximale Abweichung der modulierten Frequenz von ihrem Mittelwert während eines Signalzugs ("burst") 3,5 kHz von diesem Mittelwert (also vom Mittelwert der Frequenz minus 3,5 kHz bis Mittelwert der Frequenz plus 3,5 kHz). Die Frequenzänderung bei der frequenzmodulierten Implementierungsvariante ist also typischerweise kleiner als der Frequenzunterschied der (Mittelwerte) der verschiedenen Frequenzen von z.B. ca. 6 kHz.

Die Verwendung von zwei oder mehr Ultraschallsignalen deutlich verschiedener Frequenz kann vorteilhaft sein, da hierdurch die Sensitivität und Korrektheit der Objekterkennung wie auch die Größe des von den Schallkeulen abgedeckten Raums deutlich vergrößert werden kann. Manche Objekte reflektieren Ultraschallsignale bestimmter Frequenzen besser als von anderen Frequenzen. Außerdem haben die Schallkeulen der Ultraschallsignale unterschiedlicher Frequenzen oft unterschiedliche Dimensionen. Durch kombinierte Auswertung von Echosignalen mehrerer unterschiedlicher Frequenzen kann somit die Sensitivität der Objekterkennung, die Robustheit der Objekterkennung gegenüber Störsignalen wie auch die Größe des Raumes, in welchem Objekte überhaupt erkannt werden können, vergrößert werden.

Gemäß manchen Beispielen verwendet die Einkanal-Objekterkennung einen Algorithmus für die Erkennung eines Objekts in einem Ultraschallecho, welcher für jede der mehreren verschiedenen Frequenzen unabhängig von den Schallkeulendimensionen der mehreren verschiedenen Frequenzen ist.

Die Verwendung eines derartigen Algorithmus kann vorteilhaft sein, da die Einkanal-Objekterkennung nicht an die ggf. unterschiedlichen Dimensionen der Schallkeulen der Ultraschallsignale der verschiedenen Frequenzen angepasst werden muss. Außerdem wird hierdurch eine gewisse Unabhängigkeit von der Hardware geschaffen: so ist es möglich, den gleichen Algorithmus für die Einkanal-Objekterkennung beispielsweise in verschiedenen Fahrzeugmodellen zu nutzen, die sich bezüglich der Anzahl und/oder Höhe der verwendeten Ultraschallsignalfrequenzen unterscheiden. Es ist ggf. auch möglich, das System auf- oder umzurüsten, indem dem System weitere Ultraschallsender hinzugefügt werden, die weitere Frequenzen unterstützen. Eine Anpassung des Algorithmus bezüglich der Dimension der Schallkeule dieser weiteren Frequenz ist nicht erforderlich. Optional kann ggf. eine Anpassung von Konfigurationsparametern, die von dem Algorithmus verwendet werden, erfolgen, z.B. eine Anpassung eines Grenzwerts für die Mindesthöhe der Echosignalamplitude, um ein Echosignal eines bestimmten räumlichen Bereichs als ein erkanntes Objekt zu interpretieren. Dies kann ggf. jedoch einfach durch eine Anpassung der Konfigurationsdatei geschehen, ohne dass hierfür Programmcode umgeschrieben oder neu kompiliert werden muss.

Erfindungsgemäß ist die Auswerteeinheit dazu konfiguriert, in der Mehrkanal-Objekterkennung eines aktuell ausgeführten Zyklus als Ergebnis zurückzugeben, dass das Objekt vorhanden ist, wenn über eine Mindestanzahl an bereits ausgeführten Zyklen hinweg, in welchen jeweils Ultraschallechos der ersten Frequenz analysiert wurden, das Objekt in der Einkanalobjekterkennung dieser Zyklen erkannt wurde, wobei dieses Ergebnis auch dann zurückgegeben wird, wenn im letzten Zyklus, in welchem Ultraschallechos der zweiten Frequenz analysiert wurden, das Objekt nicht erkannt wurde. Beispielsweise kann diese Mindestanzahl 1, 2 oder ggf. auch eine Ganzzahl von 3 oder höher sein.

Dies kann vorteilhaft sein, da die erste Frequenz niedriger ist als die zweite Frequenz und somit insbesondere an den Rändern der Schallkeule eine höhere Sensitivität des Objekterkennungsalgorithmus unterstützen kann als die Signale der zweiten Frequenz. Deren Amplitude ist am Rande der Schallkeule oft so schwach, dass Objekte allein auf Basis der Ultraschallechos der zweiten Frequenz nicht mehr oder nicht mehr zuverlässig erkannt werden können. Dadurch, dass es im Wesentlichen bereits ausreicht, wenn das Objekt im Ultraschallecho der ersten Frequenz zuverlässig, also in mindestens einem oder vorzugsweise mehreren zurückliegenden Zyklen erkannt wurde, können auch Objekte am Rande der Schallkeulen noch zuverlässig erkannt werden, obwohl die Einkanal-Objekterkennungen auf Basis der ersten und zweiten Frequenzen für zumindest einige Objekte widersprüchliche Ergebnisse liefern ("Flackern" von Objekten insbesondere am Rand der Schallkeulen, da diese in den Echosignalen der ersten Frequenz erkannt werden, nicht jedoch in den Echosignalen der zweiten Frequenz).

Gemäß manchen Beispielen ist die Auswerteeinheit dazu konfiguriert, in der Mehrkanal-Objekterkennung eines aktuell ausgeführten Zyklus als Ergebnis zurückzugeben, dass das Objekt nicht vorhanden ist, wenn über eine Mindestanzahl an bereits ausgeführten Zyklen hinweg, in welchen jeweils Ultraschallechos der ersten Frequenz analysiert wurden, das Objekt in der Einkanalobjekterkennung dieser Zyklen nicht erkannt wurde, wobei dieses Ergebnis auch dann zurückgegeben wird, wenn im letzten Zyklus, in welchem Ultraschallechos der zweiten Frequenz analysiert wurden, das Objekt erkannt wurde.

Beispielsweise kann diese Mindestanzahl 1, 2 oder ggf. auch eine Ganzzahl von 3 oder höher sein.

Das Objekt wird also als "nicht vorhanden" angesehen, wenn es entweder weder im Echosignal der ersten Frequenz ("F1-Kanal") noch im Echosignal der zweiten Frequenz ("F2-Kanal") erkannt wird, oder wenn es ausschließlich im Echosignal der zweiten Frequenz erkannt wird. Da die Schallkeule der zweiten Frequenz typischerweise kleiner ist als die Schallkeule der ersten, niedrigeren Frequenz, ist es zwar möglich, dass ein Objekt ausschließlich im F1-Kanal erkannt wird, wenn es an den Rändern der Schallkeule liegt. Dass das Objekt aber ausschließlich im "kleineren" F2-Kanal erkannt wird, sollte nicht möglich sein, sodass ein derartiges Muster der Ergebnisse mehrerer Einkanal-Objekterkennungen des F1 und F2-Kanals als Artefakt gewertet werden. Ein Objekt, welches ausschließlich im F2-Kanal, nicht jedoch im F1-Kanal erkannt wird, wird also letztlich im Zuge der Mehrkanal-Objekterkennung als "nicht vorhanden" interpretiert.

Gemäß manchen Beispielen ist die Auswerteeinheit dazu konfiguriert, in jedem der Zyklen die Mehrkanal-Objekterkennung durchzuführen, wobei die Mehrkanal-Objekterkennung z.B. als eine Klassifikation einer kanalübergreifenden Sichtbarkeit des Objekts angesehen werden kann. Die Klassifikation der kanalübergreifenden Sichtbarkeit kann aber auch als Bestandteil der Mehrkanal-Objekterkennung durchgeführt und ausgegeben werden.

Ein Ergebnisraum der Klassifikation bzw. der Mehrkanal-Objekterkennung umfasst zumindest eines der folgenden möglichen Ergebnisse:
- ein Ergebnis, dass das Objekt "kanalübergreifend erkannt" wird, wenn es mindestens in n zuletzt ausgeführten Zyklen, in welchen jeweils Ultraschallechos der ersten Frequenz analysiert wurden, und mindestens in m zuletzt ausgeführten Zyklen, in welchen jeweils Ultraschallechos der zweiten Frequenz analysiert wurden, in der Einkanalobjekterkennung dieser Zyklen erkannt wurde,
- ein Ergebnis, dass das Objekt "nur F1- Einkanalbasiert erkannt" wird, wenn es mindestens in n zuletzt ausgeführten Zyklen, in welchen jeweils Ultraschallechos der ersten Frequenz analysiert wurden, erkannt wurde, nicht aber in mindestens m zuletzt ausgeführten Zyklen, in welchen jeweils Ultraschallechos der zweiten Frequenz analysiert wurden,
- ein Ergebnis, dass das Objekt "nur F2- Einkanalbasiert erkannt" wird, wenn es mindestens in m zuletzt ausgeführten Zyklen, in welchen jeweils Ultraschallechos der zweiten Frequenz analysiert wurden, erkannt wurde, nicht aber in mindestens n zuletzt ausgeführten Zyklen, in welchen jeweils Ultraschallechos der ersten Frequenz analysiert wurden,
- ein Ergebnis, dass das Objekt "kanalübergreifend nicht erkannt" wird, wenn es nicht in mindestens in n zuletzt ausgeführten Zyklen, in welchen jeweils Ultraschallechos der ersten Frequenz analysiert wurden, in der Einkanalobjekterkennung dieser Zyklen erkannt wurde, und wenn es zudem nicht in mindestens m zuletzt ausgeführten Zyklen, in welchen jeweils Ultraschallechos der zweiten Frequenz analysiert wurden, in der Einkanalobjekterkennung dieser Zyklen erkannt wurde.
Bei den Parametern m und n kann es sich jeweils um ganze Zahlen handeln, z.B. 1, 2, 3 oder höher.

Gemäß manchen Beispielen ist die Auswerteeinheit dazu konfiguriert, eine oder mehrere der folgenden Aktionen in Abhängigkeit vom Ergebnis der Mehrkanal-Objekterkennung auszuführen:
- Auswahl von einem von mehreren verfügbaren, zyklenübergreifenden Algorithmen zur räumliche Nachverfolgung des Objekts;
- Anzeige des Objekts, falls es erkannt wurde;
- Ausgabe einer Warnung oder eines Alarmsignals bezüglich der Anwesenheit des Objekts;
- Einleiten eines automatischen oder halb-automatischen Fahr-Manövers zum Umfahren des Objekts.

Dies kann vorteilhaft sein, da z.B. im Falle einer "flackernden" Objekterkennung, also einer Erkennung des Objekts auf nur einem oder einigen der verschiedenen Frequenzkanäle, ein exakterer, aber auch rechenaufwändigerer Algorithmus verwendet werden kann als bei einer konsistenten Objekterkennung über alle Kanäle hinweg. Somit ist es möglich, die Prozessorlast durch die Auswerteeinheit oder durch andere Systemkomponenten, die diese oder andere nachgeschaltete Berechnungen ausführen, zu reduzieren, denn in Fällen in welchen ein Objekt konsistent über alle Kanäle hinweg erkannt wird, ist oft ein vergleichsweise wenig rechenintensiver Algorithmus für das Tracking ausreichend. Ebenso kann das System akustische oder optische oder sonstige Warnungen an den Fahrer oder andere Systemkomponenten ausgegeben werden, falls die Mehrkanal-Objekterkennung ein Objekt-erkennt, also sich auf Basis einer Analyse von zwei oder vorzugsweise mehr Einkanal-Objekterkennungsergebnissen zum Ergebnis gekommen ist, dass hier mit hinreichender Wahrscheinlichkeit tatsächlich ein Objekt existiert. Zusätzlich oder alternativ können vom System auch Fahrmanöver eingeleitet werden, um z.B. eine Kollision mit dem Objekt zu verhindern.

Gemäß manchen Beispielen wird die Berechnung des Ergebnisses der Einkanal-Objekterkennung und/oder der Mehrkanal-Objekterkennung als Funktion der folgenden Eingangsdaten durchgeführt:
- Amplitude des empfangenen Ultraschallechos der aktuell ausgewerteten Frequenz;
- Indikator eines Unterschieds der Amplitude der Ultraschallechos der aktuell ausgewerteten Frequenz von der Amplitude der Ultraschallechos einer anderen der verschiedenen Frequenzen, wobei der Indikator insbesondere eine Differenz oder ein Verhältnis der Amplituden ist;
- Indikator eines Unterschieds der Amplitude der Ultraschallechos der aktuell ausgewerteten Frequenz von der Amplitude eines aktuell erfassten Bodenechos, wobei der Indikator insbesondere eine Differenz oder ein Verhältnis der Amplituden ist.

Die Amplitude des Bodenechos kann z.B. auf Basis allgemein bekannter Verfahren aus den empfangen Echosignalen ermittelt werden. Beispielsweise kann die Wahrscheinlichkeit, dass ein Echo vom Boden kommt, anhand einer vorab erstellten Auswertung der Boden-Echos erfolgen. Dazu werden über eine gewisse Zeit die Echos der mehreren verschiedenen Frequenzen gesammelt, ohne dass sich ein Objekt im Sensor-Detektionsbereich befindet. Diese Echos werden auch als Referenz-Bodenechosignal bezeichnet. Auf Basis dieser Echos wird sodann eine statistische (Gamma-) Verteilung approximiert. Durch Abgleich der aktuell empfangenen Ultraschallechos mit dieser Verteilung kann für das aktuell untersuchte, "neue" Echo die Wahrscheinlichkeit bestimmt werden, dass es vom Boden stammt.

In den hier geschilderten Beispielen kann die Auswerteeinheit dazu konfiguriert sein, die Amplituden der aktuell ausgewerteten Echos ins Verhältnis zum Bodenechosignal, nämlich zu dem vorab-bestimmten Referenz-Bodensignal, zu setzen. Insbesondere kann die Amplitude ins Verhältnis zum größten Wert der besagten Verteilung gesetzt werden oder alternativ die Bodenecho-Wahrscheinlichkeit für die aktuell empfangenen und analysierten Echosignale berechnet werden.

Gemäß einem weiteren Beispiel wird das Bodenecho so ermittelt, wie dies in der deutschen Patentanmeldung DE 102022116373.3 (30. Juni 2022) beschrieben ist.

Dadurch, dass nicht nur die Ergebnisse der vergangenen Einkanal-Objekterkennungen, die im Wesentlichen binäre Ergebnisse sind (Objekt erkannt oder nicht), sondern auch analoge Werte wie insbesondere die Amplitude der empfangenen Ultraschallechos und/oder Informationen bezüglich eines Unterschieds dieser Amplitude von der Amplitude anderer Frequenzen und/oder vom Bodenecho, kann die Exaktheit der Objekterkennung erhöht werden. Insbesondere kann die Amplitudenhöhe und/oder der Indikator bereits bei der Einkanal-Objekterkennung und/oder bei der Mehrkanal-Objekterkennung verwendet werden, um festzustellen, ob ein Objekt im Echosignal des aktuell ausgewerteten Kanals erkennbar ist, und um das Ergebnis der Einkanal-Objekterkennung im Zuge der Mehrkanal-Objekterkennung in Abhängigkeit der Amplitude oder des Indikators des zu dieser Einkanal-Objekterkennung korrespondierenden Echos höher oder niedriger zu gewichten. Beispielsweise kann die Mehrkanal-Objekterkennung dazu konfiguriert sein, ein Einkanal-Objekterkennungsergebnis höher zu gewichten bzw. stärker zu berücksichtigen, wenn eine absolute Amplitude hoch ist, also z.B. einen bestimmten Grenzwert überschreitet, da dies ein Indiz für ein starkes, aussagekräftiges Echosignal und damit für das Vorhandensein des Objekts ist. Die Mehrkanal-Objekterkennung kann - zusätzlich oder alternativ dazu - dazu konfiguriert sein, ein Einkanal-Objekterkennungsergebnis höher zu gewichten bzw. stärker zu berücksichtigen, wenn der Indikator anzeigt, dass die Amplitude dieser Frequenz relativ zur Amplitude einer anderen der Frequenzen und/oder relativ zum Bodenecho hoch ist, also z.B. einen bestimmten Grenzwert überschreitet. Dies kann ein Indiz für ein starkes, aussagekräftiges Echosignal und damit für das Vorhandensein des Objekts sein, da dieses Signal sich besonders stark gegenüber dem Bodenecho und/oder gegenüber einem Kreuzecho einer anderen Frequenz abzeichnet.

Vorzugsweise ist die Auswerteeinheit dazu konfiguriert, während der Nutzung die Amplituden der verschiedenen Frequenzen kontinuierlich zu erfassen und zu speichern, wobei vorzugsweise auch der besagte Indikator relativ zu den Amplituden der Echos der anderen Frequenzen bzw. relativ zum Bodensignal berechnet und gespeichert werden. Vorzugsweise werden auch Kollisionen oder Beinahe-Kollisionen erfasst und gespeichert, sodass anhand der gesammelten Daten ein kontinuierlich verbesserter und erweiterter Trainingsdatensatz erzeugt wird. Gemäß manchen Ausführungsformen wird dieser Trainingsdatensatz wiederholt dazu verwendet, ein prädiktives Modell, z.B. eine Markow-Kette, zu trainieren, und das trainierte Modell sodann zu nutzen, um die Mehrkanal-Objekterkennung als Funktion einer Sequenz von mehreren Ergebnissen der Einzelkanalobjekterkennungen durchzuführen.

Insbesondere die Bestimmung des Amplitudenverhältnisses oder der Amplitudendifferenz anstelle von oder zusätzlich zu der Ermittlung des Absolutwertes der Amplitude kann vorteilhaft sein, da diese relativen Amplitudenkennwerte eine noch bessere Unterscheidung von aussagekräftigen Echos von einem nicht-aussagekräftigen (Boden)rauschen ermöglichen, da Amplituden von Echosignalen verschiedener Objekte für die Echos einer bestimmten Frequenz unterschiedlich sein können. Oft hat sich daher die Bestimmung von relativen Werten (Amplitudendifferenz oder Amplitudenverhältnis)

In manchen Beispielen wird die Amplitudendifferenz und/oder das Amplitudenverhältnis für jedes im Echo identifizierte Objekt (also z.B. für Echobereiche deren Amplitude oberhalb eines Mindestwerts liegen) bestimmt.

In manchen Beispielen wird als Ergebnis der Einkanal-Objekterkennung zurückgegeben, dass das Objekt nicht erkannt wurde, wenn das Verhältnis der Amplitude des Echos, für das die Einkanal-Objekterkennung aktuell durchgeführt wird, relativ zu der Amplitude des Echos einer oder mehrerer der anderen Frequenzen unterhalb eines vordefinierten Grenzwerts ist.

In manchen weiteren Beispielen wird als Ergebnis der Einkanal-Objekterkennung zurückgegeben, dass das Objekt nicht erkannt wurde, wenn die Differenz der Amplitude des Echos, für das die Einkanal-Objekterkennung aktuell durchgeführt wird, und der Amplitude des Echos einer oder mehrerer der anderen Frequenzen oberhalb eines vordefinierten Grenzwerts ist und die Amplitude des Echos, für das die Einkanal-Objekterkennung aktuell durchgeführt wird, kleiner ist als die Amplitude des Echos einer oder mehrerer der anderen Frequenzen.

Beispielsweise kann die Auswerteeinheit dazu konfiguriert sein, auf eine Konfigurationsdatei zuzugreifen, in welcher eine erste Mindestamplitudenhöhe bezüglich der ersten Frequenz sowie eine zweite Mindestamplitudenhöhe bezüglich der zweiten Frequenz spezifiziert ist. Falls weitere Frequenzen vom System und den Ultraschallsendern unterstützt werden, können auch weitere Mindestamplitudenhöhen bezüglich der jeweiligen weiteren Frequenzen in der Konfigurationsdatei definiert sein. Im Zuge der Einkanal-Objekterkennung auf Basis einer bestimmten Frequenz liest die Auswerteeinheit die vordefinierte Mindestamplitudenhöhe dieser Frequenz und vergleicht sie mit der Amplitude des Echosignals eben dieser Frequenz. Falls die Amplitude in einem bestimmten räumlichen Bereich des Echosignals die Mindestamplitudenhöhe überschreitet, stellt die Auswerteeinheit als Ergebnis der Einkanal-Objekterkennung fest, dass ein Objekt im Ultraschallecho vorhanden ist. Optional wird auch die Position des Objekts bestimmt, z.B. als der Bereich, in welchem die Echoamplitude die zur jeweiligen Frequenz hinterlegten Mindestamplitude überschreitet. Die Mindestamplituden der verschiedenen Frequenzen können unterschiedlich sein. Somit kann die Auswerteeinheit im Zuge der Einkanal-Objekterkennung unter Verwendung der für die jeweils aktiv ausgewertete Frequenz hinterlegtem Mindestamplitude durchführen. Optional kann die Einkanal-Objekterkennung weitere Rechenschritte umfassen, z.B. Normalisierungsschritte, Signalglättungs- oder Entrauschungs-Schritte oder dergleichen.

Im Zuge der Mehrkanal-Objekterkennung können die Amplituden der Echosignale der ersten und zweiten Frequenz ebenfalls als Eingang verwendet werden. Beispielsweise kann die Durchführung der Mehrkanal-Objekterkennungen so implementiert sein, dass diese einmal pro Zyklus bzw. Analyse eines bestimmten Frequenzkanals durchgeführt wird, wobei in einem ersten Teil der Mehrkanal-Objekterkennung die Einkanal-Objekterkennung des aktuell verwendeten Frequenzkanals durchgeführt wird und in einem zweiten Teil der Mehrkanal-Objekterkennung das Ergebnis dieser aktuellen Einkanal-Objekterkennung verglichen wird mit den Ergebnissen von zurückliegenden Einkanal-Objekterkennungen (zumindest auch eines) anderen Kanals oder anderer Kanäle. In manchen Implementierungsvarianten wird im Zuge der Mehrkanal-Objekterkennung die Differenz oder das Verhältnis der Amplituden der Echosignale der ersten und der zweiten Frequenzen berechnet, um zu prüfen, ob das Objekt auf beiden (bzw. auf mehreren bzw. allen) Kanälen zu erkennen ist, jedoch anhand der Schallkeulen-Charakteristik unterschiedlich stark empfangen wird. Zusätzlich kann hier auch bestimmt werden, ob es sich um ein Objekt oder um ein niedriges Boden-Echo handelt. Falls beispielsweise die Amplitudendifferenz oder das Amplitudenverhältnis der ersten und der zweiten Frequenz sehr groß ist kann dies ein Hinweis darauf sein, dass sich das Ultraschallecho mit der kleineren Amplitude nicht hinreichend stark vom Bodenecho bzw. allgemeinen "Hintergrundrauschen" unterscheidet, um als verlässliches/aussagekräftiges Signal für das Vorhandensein oder nichtVorhandensein eines Objekts zu dienen. Gleiches gilt für Echos mit sehr niedriger absolut betrachteter Amplitude. Beispielsweise kann die Auswerteeinheit in manchen Implementierungsbeispielen dazu konfiguriert sein, Echos mit einem besonders niedrigen Amplitudenverhältnis zu den Amplituden anderer Frequenzen oder mit einer besonders kleinen absoluten Amplitude nicht auszuwerten bzw. keine Einkanal-Objekterkennung auf Basis dieser Echos vorzunehmen. Beispielsweise kann das Echo in diesem Fall als Boden-Echo ohne Aussagekraft bezüglich der Präsenz des Objekts gewertet werden. Der Indikator bezüglich der Amplitudenunterschiedlichkeit kann z.B. von der Mehrkanal-Objekterkennung dazu genutzt werden, die Ergebnisse der Einzelkanal-Objekterkennung unterschiedlich zu gewichten. Dies kann explizit mittels Regeln erfolgen oder implizit während der Trainingsphase eines prädiktiven Modells mittels einer Technik des maschinellen Lernens.

Gemäß manchen Beispielen umfasst die räumliche Nachverfolgung des Objekts im Falle des Ergebnisses "kanalübergreifend erkannt" einen Abgleich der Position des aktuell erkannten Objekts mit der Position des Objekts, die im unmittelbar zuvor ausgeführten Zyklus ermittelt wurde, um festzustellen, ob ein Abstand der im unmittelbar zuvor ausgeführten Zyklus ermittelten Position des Objekts von der aktuell festgestellten Position des Objekts unterhalb eines Grenzwerts liegt.

Wenn also in mehreren aufeinanderfolgenden Zyklen bzw. den Echosignalen mehrerer nacheinander ausgewerteter Frequenzen kontinuierlich das Objekt erkannt wird, ist der zeitliche Abstand zwischen zwei Objekterkennungs-Ereignissen recht klein. Auch wenn das Objekt sich in der Zeit zwischen zwei aufeinanderfolgenden Zyklen relativ zu den Ultraschallsendern und/oder absolut bewegt haben sollte, ist die mögliche Ortsveränderung aufgrund der in jedem einzelnen Zyklus erfolgenden Objekterkennung relativ klein. In diesem Fall reicht es also für die räumliche Nachverfolgung des Objekts über mehrere Zyklen hinweg aus, festzustellen, ob die Position des Objekts relativ zur Position des im letzten Zyklus erkannten Objekts nicht weiter entfernt liegt als der besagte Grenzwert, um in diesem Fall zu erkennen, dass es sich bei den in den aufeinander folgenden Zyklen erkannten Objekten um das gleiche Objekt handelt, welches ggf. lediglich seine absolute oder relative Position verändert hat. Falls der räumliche Abstand den Grenzwert überschreitet, geht die Auswerteeinheit davon aus, dass es sich um verschiedene Objekte handelt bzw., falls es an der Kontinuität der Objekterkennung fehlt, dass ein Störsignal oder Rauschen vorliegt.

Der besagte Algorithmus zur Nachverfolgung eines Objektes kann vorteilhaft sein, da er wenig rechenintensiv ist. Ein einfacher Vergleich des Abstands der Positionen der in nacheinander folgenden Zyklen erkannten Objekte mit einem Grenzwert ist rechnerisch nicht aufwändig und damit insbesondere für Echtzeitsysteme mit geringer Rechenleistung vorteilhaft. Solche Systeme werden gerade im Fahrzeugbereich häufig eingesetzt.

Gemäß manchen Beispielen ist das System als Fahrzeugkomponente ausgebildet und/oder Teil eines Fahrzeugs. Beispielsweise können die Ultraschallsender und Sensoren in der vorderen und/oder hinteren Stoßstange integriert sein, aber auch seitlich an den Fahrzeugtüren, am Dach oder am Boden, z.B. um Hindernisse in allen drei Dimensionen erkennen zu können. Vorzugsweise sind die Grenzwerte für den maximalen Abstand zwischen den Objekten, die in zwei aufeinanderfolgenden Zyklen erkannt wurden, um die beiden Objekte als das gleiche Objekt zu behandeln, abhängig von der Geschwindigkeit des Fahrzeugs, wobei der Grenzwert mit Zunahme der Fahrzeuggeschwindigkeit größer wird.

Zusätzlich oder alternativ dazu umfasst die räumliche Nachverfolgung des Objekts im Falle des Ergebnisses "nur F1-Einkanalbasiert erkannt":
- Vorhersage der künftigen Position des Objekts anhand Positionsdaten des Objekts, die bei der Analyse der Ultraschallechos der ersten Frequenz im aktuellen und ein oder mehreren zuvor ausgeführten Zyklen erkannt wurden;
- Im nächsten Zyklus, in welchem Ultraschallsignale der ersten Frequenz analysiert werden, Abgleich anhand der aktuell analysierten Ultraschallechos erhaltenen Positionsdaten des Objekts mit der vorhergesagten Position, um festzustellen, ob ein Abstand der vorhergesagten Position des Objekts von der aktuell festgestellten Position des Objekts unterhalb eines Grenzwerts liegt;

Die Auswerteeinheit ist dazu konfiguriert, falls der Positionsabstand unterhalb des Grenzwerts liegt, das in den verschiedenen Zyklen erkannte Objekt als identisches Objekt zu behandeln, und andernfalls die Existenz zweier unterschiedlicher Objekte oder ein Rauschsignal als Ergebnis der Nachverfolgung zurückzugeben.

Sofern also beispielsweise ein Objekt nur im F1-Kanal erkannt wird, nicht jedoch im F2-Kanal, wenn das Objekt also im Wechsel der Kanäle zwischen "erkannt" und "nicht erkannt" flackert, wird (rechenaufwändig) die künftige Position des Objekts rechnerisch vorhergesagt, z.B. durch Extrapolation der Positionsveränderung des Objekts über die letzten beiden F1-Kanal-basierten Objekterkennungsergebnisse hinweg. Da zwischen den Positionsbestimmungen innerhalb der F1 Zyklen ein größerer zeitlicher Abstand existiert, innerhalb welchem sich das Objekt bewegen kann, stellt die Vorhersage der Position des Objekts auf Basis seiner bisherigen Ortsveränderungsdaten sicher, dass das Objekt noch zuverlässig nachverfolgt werden kann. Ein einfacher Abgleich auf Basis eines Grenzwerts für den maximalen Abstand wäre hier deutlich weniger exakt, da der zeitliche Abstand zwischen den verglichenen Positionsdaten zu groß ist. Somit wird diese rechenaufwändige Form der Objektnachverfolgung gezielt nur dann eingesetzt, wenn das Objekt nicht kontinuierlich in jedem Frequenzkanal zuverlässig erkannt wird. Insbesondere falls drei oder mehr verschiedene Frequenzen zum Einsatz kommen, und das Objekt z.B. ausschließlich in dem Kanal mit der niedrigsten Frequenz erkannt wird, wird die Position des Objekts nur in jedem dritten Zyklus (bei mehr Frequenzen noch seltener) erkannt. In diesem Fall ermöglicht jedoch der Umstand, dass die Position des Objekts für den nächsten Zyklus, in dem der gleiche Kanal wieder verwendet wird, vorhergesagt wird, trotz der zeitlichen Lücke zwischen den Positionsbestimmungen eine hinreichend akkurate Entscheidung, ob es sich bei dem Objekt um das gleiche und nur räumlich bewegte Objekt handelt, das bereits zuvor erkannt wurde, oder um ein anderes Objekt.

Gemäß manchen Beispielen verwendet die Auswerteeinheit ein trainiertes prädiktives Modell zur Durchführung der Mehrkanal-Objekterkennung.

Dies kann vorteilhaft sein, da maschinelle Verfahren in der Lage sind, auch komplexe, ggf. auch nicht-lineare Muster innerhalb auch längerer Sequenzen von Einkanal-Objekterkennungsergebnissen, die verlässlich darauf hindeuten, dass das Objekt tatsächlich vorhanden ist (oder nicht vorhanden ist), zu erkennen.

Demgegenüber ist die Komplexität, von Mustern, die von regelbasierten Systemen erkannt werden kann, oftmals begrenzt.

Das trainierte prädiktive Modell insbesondere eine Markow-Kette sein. Es hat sich herausgestellt, dass diese Form des prädiktiven Modells besonders geeignet ist, das tatsächliche Vorhandensein von Objekten verlässlich auf Basis von ggf. auch längeren Sequenzen von Einkanal-Objekterkennungsergebnissen von zwei oder auch mehr verschiedenen Sequenzen zu erkennen.

Gemäß manchen Beispielen ist das trainierte prädiktive Modell eine Markow-Kette, die folgenden Zustände umfasst:
- einen Zustand "Objekt in Mehrkanal-Objekterkennung weder auf Basis der ersten (F1) noch der zweiten Frequenz (F2) erkannt";
- einen Zustand "Objekt in Mehrkanal-Objekterkennung nur auf Basis der ersten Frequenz (F1) erkannt";
- einen Zustand "Objekt in Mehrkanal-Objekterkennung nur auf Basis der zweiten Frequenz (F2) erkannt" ;
- einen Zustand "Objekt in Mehrkanal-Objekterkennung sowohl auf Basis der ersten (F1) als auch der zweiten Frequenz (F2) erkannt".

Die Zustände entsprechen also den möglichen Ergebnissen der Merkanal-Objekterkennung (und können z.B. bei der Verwendung einer dritten und weiteren Frequenz entsprechend mehr Zustände/Knoten enthalten.

Die Zustände sind jeweils durch Pfade mit einem anderen der Zustände verbunden, wobei den Pfaden Übergangswahrscheinlichkeiten zugewiesen sind, welche insbesondere durch statistische Analyse von Trainingsdaten erhalten wurden, wobei die Trainingsdaten beobachtete Einzelkanal-Objekterkennungsergebnissequenzen und annotierte Mehrkanal-Objekterkennungsergebnissen umfassen.

Beispielsweise kann ein Trainingsdatensatz dadurch erstellt werden, dass ein Objekt an einer bestimmten Position relativ zu dem System zur ultraschallbasierten Objekterkennung positioniert wird und dann eine Serie von Einkanal-Objekterkennungsergebnissen berechnet werden auf Basis der Echosignale mehrerer verschiedener Frequenzen, wie dies hier bereits an mehreren Stellen beschrieben wurde. Vorzugsweise bewegen sich hierbei das Objekt und das System zumindest in einigen Testläufen relativ zueinander. Beispielsweise kann das Objekt relativ zum System bewegt (gefahren, gezogen, etc) werden und/oder das System kann sich relativ zum Objekt bewegen während es die Ultraschallechos der verschiedenen Frequenzen empfängt und verarbeitet. Beispielsweise kann das System and oder in einem Fahrzeug installiert werden und das Fahrzeug kann sich mit verschiedenen Geschwindigkeiten in verschiedenen Versuchsreihen relativ zum Objekt bewegen. Vorzugsweise hat das Objekt in verschiedenen Testreihen eine unterschiedliche Größe, Orientierung, Form, Oberfläche und/oder Materialbeschaffenheit. Außerdem werden mehrere Versuchsreihen durchgeführt, bei welchen kein Objekt im Schallpegel der Ultraschallsensoren positioniert wird. Auf Basis des Wissens, in welchen Testreihen zur Erstellung des Trainingsdatensatzes tatsächlich ein Objekt vorhanden war und wann nicht werden die für die verschiedenen Testreihen und die verschiedenen Frequenzen berechneten Serien von Einkanal-Objekterkennungsergebnissen annotiert mit dem Wissen, ob hier tatsächlich ein Objekt vorhanden war - und hätte erkannt werden müssen - oder nicht. Vorzugsweise enthält jedes Einkanal-Objekterkennungsergebnis auch eine Annotation bezüglich der Amplitude des Echosignals, welches in der Einkanal-Objekterkennung ausgewertet wurde, und/oder einen Indikator, der den Unterschied dieser Amplitude zur Amplitude des Echosignals einer anderen Frequenz oder des Bodenechos angibt. Die für die Erstellung des Trainingsdatensatzes durchgeführten Einkanal-Objekterkennungen werden auch als Trainings-Einkanal-Objekterkennungen bezeichnet. Die Annotation, ob tatsächlich ein Objekt vorhanden war oder nicht, kann insbesondere bei der ersten Erstellung des Trainingsdatensatzes manuell vorgenommen werden. In manchen Ausführungsformen kann die Annotation automatisch oder halb-automatisch erfolgen, z.B. in Form von Mehrkanal-Objekterkennungsergebnissen eines bereits existierenden prädiktiven Modells.

Nachdem der Trainingsdatensatz erstellt wurde, wird ein Verfahren des prädiktiven Lernens auf dem Trainingsdatensatz ausgeführt, um ein trainiertes, prädiktives Modell zu erhalten, welches in eine Auswerteeinheit integriert und zur Durchführung der Mehrkanal-Objekterkennungs-Ergebnisse verwendet werden kann.

Insbesondere kann das trainierte prädiktive Modell dazu konfiguriert sein und verwendet werden, das Ergebnis der Mehrkanal-Objekterkennung als Funktion einer beobachteten Sequenz von Einzelkanal-Objekterkennungen zu berechnen. Die beobachtete Sequenz, die das Modell als Input verwendet und auswertet kann insbesondere mindestens 3, insbesondere mindestens 4, insbesondere mindestens 5 nacheinander erhaltenen Ergebnisse von Einkanal-Objekterkennungsergebnissen umfassen.

Das prädiktive Modell kann also durch Anwendung eines maschinellen Lernverfahrens auf Trainingsdaten gewonnen werden, wobei die Trainingsdaten Sequenzen von beobachteten Trainings-Einzelkanal-Objekterkennungsergebnissen und annotierten Trainings-Mehrkanal-Objekterkennungsergebnissen umfassen. Im Zuge des Trainings hat das Modell gelernt, Mehrkanalobjekterkennungs-Ergebnisse mit Sequenzen von Einkanal-Objekterkennungsergebnissen zu korrelieren, um ein Mehrkanal-Objekterkennungsergebnis als Funktion der Sequenz aufeinanderfolgender Einkanal-Objekterkennungsergebnisse der verschiedenen Sequenzen vorherzusagen.

Vorzugsweise enthalten die Trainingsdaten auch ein oder mehrere der folgenden, jeweils einem der Trainings-Einkanal-Objekterkennungsergebnis zugewiesenen Parameterwerte, sodass das Modell im Zuge des Trainings lernt, Mehrkanalobjekterkennungs-Ergebnisse auch mit diesen Parameterwerten zu korrelieren, um ein Mehrkanal-Objekterkennungsergebnis als Funktion auch dieser Parameterwerte vorherzusagen:
∘ Amplitude des in einer Trainings-Einkanal-Objekterkennung ausgewerteten Ultraschallechos;
∘ Indikator eines Unterschieds der Amplitude des in einer Trainings-Einkanal-Objekterkennung ausgewerteten Ultraschallechos von der Amplitude der Ultraschallechos einer anderen der verschiedenen Frequenzen, wobei der Indikator insbesondere eine Differenz oder ein Verhältnis der Amplituden ist;
∘ Indikator eines Unterschieds der Amplitude des in einer Trainings-Einkanal-Objekterkennung ausgewerteten Ultraschallechos von der Amplitude eines Bodenechos, wobei der Indikator insbesondere eine Differenz oder ein Verhältnis der Amplituden ist.

Dies kann vorteilhaft sein, da das Modell anhand der Amplitude oder des Indikators erkennen kann, wie verlässlich bzw. aussagekräftig die zu einer bestimmten Amplitude gehörenden Einkanal-Objekterkennungsergebnisse sind. In der Regel sind Einkanal-Objekterkennungs-Ergebnisse verlässlicher und werden bei der Berechnung des Mehrkanal-Objekterkennungsergebnisses stärker berücksichtigt, wenn die Amplitude in absoluter und/oder relativer Hinsicht bezogen auf die Amplituden anderer Echos einschließlich des Bodenechos groß ist.

Bei dem prädiktiven Modell kann es sich insbesondere um eine Markow-Kette handeln. Beispielsweise kann die Markow-Kette zunächst, bevor das Training beginnt, ohne Übergangswahrscheinlichkeiten spezifiziert werden oder die Wahrscheinlichkeiten werden mit voreingestellten Werten, z.B. 50% oder sonstigen Schätzwerten, initialisiert. Dann können im Zuge des Trainings die Übergangswahrscheinlichkeiten zwischen den Endergebnissen der Mehrkanal-Objekterkennung dadurch ermittelt werden, dass die bei der Nutzung des hier beschriebenen Systems bzw. Verfahrens über einen Zeitraum hinweg ermittelten und im Trainingsdatensatz enthaltenen, tatsächlich beobachteten Abfolge dieser Ergebnisse statistisch analysiert werden, um die Wahrscheinlichkeit des Eintretens eines bestimmten Zustands im nächsten Zyklus (nächste Analyse des nächsten Frequenzkanals gemäß Schema) bei gegebenem Zustand im aktuell ausgeführten Zyklus zu berechnen. Die durch diese Analyse berechneten Übergangswahrscheinlichkeiten können nun in die Markow-Kette integriert werden. Außerdem lernt das Modell, Muster innerhalb der Einkanal-Objekterkennungsserien der Trainingsdaten zu erkennen, sodass die als Ergebnis des Trainings erzeugte Markow-Kette für die Vorhersage künftiger Zustände bzw. des Mehrkanal-Objekterkennungsergebnisse des künftigen Zyklus als Funktion einer Serie von zurückliegenden Einkanal-Objekterkennungsergebnissen genutzt werden kann.

In einem weiteren Aspekt ist ein Verfahren zur ultraschallbasierten Objekterkennung offenbart. Das Verfahren wird zyklisch für jede von mehreren unterschiedlichen Frequenzen durchgeführt. Für jede der mehreren unterschiedlichen Frequenzen werden die folgenden Schritte durchgeführt, wobei die mehreren Frequenzen zyklisch alternierend gemäß eines vordefinierten Schemas verwendet werden und die mehreren Schritte für die neu verwendete Frequenz in einem neuen Zyklus wiederholt werden:
- Empfang von Ultraschallechos der Frequenz durch einen oder mehrere Ultraschallempfänger;
- Durchführung einer Einkanal-Objekterkennung durch eine Auswerteeinheit, wobei eine Einkanal-Objekterkennung eine Analyse des Ultraschallechos der einen Frequenz zur Erkennung eines Objekts umfasst,
- Durchführung einer Mehrkanal-Objekterkennung, wobei eine Mehrkanal-Objekterkennung eine Analyse der Ergebnisse der aktuell durchgeführten Einkanal-Objekterkennung und mindestens einer weiteren in der Vergangenheit durchgeführten Einkanal-Objekterkennung im Ultraschallecho einer anderen der mehreren Frequenzen mit dem Ziel der Erkennung des Objekts ist, und
- Ausgabe eines Ergebnisses der Mehrkanal-Objekterkennung als das Ergebnis der ultraschallbasierten Objekterkennung des aktuellen Zyklus.

In einem weiteren Aspekt ist ein Verfahren zur Bereitstellung einer Auswerteeinheit für die ultraschallbasierte Objekterkennung offenbart. Das Verfahren umfasst:
- Bereitstellung von Trainingsdaten, welche Sequenzen von beobachteten Trainings-Einzelkanal-Objekterkennungsergebnissen und annotierten Trainings-Mehrkanal-Objekterkennungsergebnissen umfassen, wobei jedes der Trainings-Einzelkanal-Objekterkennungsergebnissen beinhaltet: eine Angabe, ob in einem Ultraschallecho einer von mehreren verschiedenen Frequenzen ein Objekt erkennbar ist oder nicht, die Frequenz des bei der Einkanal-Objekterkennung analysierten Ultraschallechos, und optional Parameterwerte zur Amplitude dieses Echos und/oder eines Indikators des Unterschieds dieser Amplitude von einem Echo einer anderen der Frequenzen oder einem Bodenecho, wobei die Trainingsdaten Sequenzen von nacheinander erhaltenen Einkanal-Objekterkennungsergebnissen enthält, welche mit Angaben bezüglich des tatsächlichen Vorhandenseins des Objekts annotiert sind;
- Anwendung eines maschinellen Lernverfahrens, um ein prädiktives Modell zu erzeugen, wobei das Modell im Zuge des Trainings lernt, Mehrkanalobjekterkennungs-Ergebnisse mit Sequenzen von Einkanal-Objekterkennungsergebnissen und optional auch den Parameterwerten zu korrelieren, um ein Mehrkanal-Objekterkennungsergebnis als Funktion der Sequenz aufeinanderfolgender Einkanal-Objekterkennungsergebnisse der verschiedenen Frequenzen und optional auch der Parameterwerte vorherzusagen;
- Integration des prädiktiven Modells in eine Auswerteeinheit für die ultraschallbasierte Objekterkennung; und
- Bereitstellung der Auswerteeinheit. Beispielswiese kann die Auswerteeinheit in ein System zur ultraschallbasierten Objekterkennung integriert und verwendet werden, wie dieses hier anhand verschiedener Beispiele beschrieben ist.

Nach Ausführungsformen wird das Ergebnis der ultraschallbasierten Objekterkennung verwendet, um ein Fahrzeug autonom oder semi-autonom zu steuern und/oder um einen Fahrer vor dem Objekt zu warnen.

Es versteht sich, dass eine oder mehrere der vorgenannten Ausführungsformen miteinander kombiniert werden können, solange sich die Ausführungsformen nicht gegenseitig ausschließen.

Unter einem "Kanal" wird hier ein Betriebsmodus des Systems verstanden, in welchem von der Auswerteeinheit nur Ultraschallechos einer bestimmten Frequenz analysiert werden. Dieser Betriebsmodus kann auf verschiedene Weise realisiert werden, z.B. dadurch, dass ein oder mehrere Ultraschallsensoren so gesteuert werden, dass sie immer nur Ultraschallsignale einer von mehreren vordefinierten Frequenzen aussenden, während der zu dieser Frequenz gehörende Kanal aktiv ist. Zusätzlich oder alternativ dazu können auch mehrere hardwarebasierte oder softwarebasierte Frequenzfilter so gesteuert bzw. verwendet werden, dass sie immer nur Ultraschallechos einer von mehreren vordefinierten Frequenzen empfangen oder analysieren, während der zu dieser Frequenz gehörende Kanal aktiv ist. Ein Zyklus eines hier beschriebenen Verfahrens korrespondiert zur Zeitspanne, während welcher ein bestimmter Kanal aktiv ist.

Wenn ein Kanal einer bestimmten Frequenz "aktiv" ist, kann das System dazu konfiguriert sein, dass während dieser Zeit nur Sender zum Aussenden eines Signals dieser Frequenz aktiv sind und nur Empfänger zum Empfangen einer Reflexion dieses Signals, also eines Echo-Signals, aktiv sind.

Unter einer "Kontrolleinheit" wird hier ein Softwaremodul und/oder Hardwaremodul verstanden, welches dazu konfiguriert ist, die mehreren Ultraschallsender zu steuern. Die Kontrolleinheit kann z.B. Bestandteil der Auswerteeinheit sein oder mit dieser operativ verbunden sein. Insbesondere kann die Steuerung so erfolgen, dass die Ultraschallsender zyklisch alternierend zum Senden der Ultraschallsignale gemäß einem Sendeschema veranlasst werden, sodass innerhalb eines Zyklus (der der Aktivitätszeit eines Kanals entspricht) vorzugsweise immer nur Ultraschallsignale einer einzigen der mehreren unterschiedlichen Frequenzen gleichzeitig emittiert werden. Das für die Analyse verwendete vordefinierte Schema entspricht dem Sendeschema.

Unter einer "Auswerteeinheit" wird hier ein Datenverarbeitungssystem verstanden, welches dazu konfiguriert ist, Ultraschallechos auszuwerten, um Objekte in der Umgebung des die Ultraschallsensoren umfassenden Systems zu erkennen. Beispielsweise kann es sich bei der Auswerteeinheit um Software, Hardware, Firmware oder eine Kombination davon handeln. Die Auswerteeinheit kann z.B. als sog. "embedded System" realisiert sein und ein oder mehrere Mikroprozessoren umfassen, die zusammen mit den Ultraschallsensoren und/oder Ultraschallsendern als Bausatz oder Nachrüst-Kit für Fahrzeuge ausgebildet sind. Es ist aber auch möglich, dass die Auswerteeinheit integraler Bestandteil einer zentralen Fahrzeugsteuerungslogik ist.

Unter einer "Objekterkennung" wird hier eine computerbasierte Auswertung von Ultraschallechos verstanden, bei welcher versucht wird, das Vorhandensein von ein oder mehreren Objekten innerhalb des vom ursprünglichen Ultraschallsignal abgedeckten Raumes zu erkennen. Optional kann die Objekterkennung auch eine Erkennung der Position des Objekts und/oder weiterer Objekteigenschaften (Größe, Form, Objekttyp, etc.) umfassen. Die Objekterkennung kann auf verschiedene Weisen implementiert sein. In einem einfachen Fall umfasst die Objekterkennung eine Prüfung, ob eine Echosignalamplitude einen vordefinierten Schwellenwert überschreitet, wobei die Anwesenheit eines Objekts dann erkannt wird, wenn der Schwellenwert überschritten ist. In anderen Implementierungsvarianten können auch komplexere Objekterkennungsverfahren verwendet werden, beispielsweise Markow-Ketten oder neuronale Netze oder andere Verfahren des maschinellen Lernens. Auch Kombinationen von einfachen, auf Amplitudenvergleich beruhenden Algorithmen mit komplexen Algorithmen sind möglich.

Unter einer "Nachverfolgung eines Objekts" wird hier eine computerbasierte Auswertung von Ultraschallechos über einen Zeitraum hinweg (z.B. über mehrere Zyklen bzw. Frequenzkanal-Wechsel hinweg) verstanden mit dem Ziel, eine absolute und/oder relative räumliche Bewegung eines erkannten Objekts nachzuvollziehen. Beispielsweise kann es sich bei dem Objekt um ein bewegliches Objekt handeln. Eine relative Bewegung kann z.B. zwischen dem Objekt und einem Fahrzeug, welches das hier beschriebene System einschließlich der Ultraschallsensoren beinhaltet, geschehen.

Unter einer Markow-Kette wird eine Funktion verstanden, welche einen stochastischen Prozess beschreibt und dazu dient, Wahrscheinlichkeiten für das Eintreten zukünftiger Ereignisse (auch als Zustände bezeichnet) anzugeben. Eine Markow-Kette basiert auf der Annahme, dass durch Kenntnis einer nur begrenzten Vorgeschichte ebenso gute (oder zumindest im jeweiligen Anwendungskontext hinreichend ähnlich gute) Prognosen über die zukünftige Entwicklung möglich sind wie bei Kenntnis der gesamten Vorgeschichte des Prozesses. Bei Markow-Ketten erster Ordnung wird der zukünftige Zustand des Prozesses nur als Funktion des aktuellen Zustands berechnet und hängt nicht von weiteren vergangenen Zuständen ab. Bei Markow-Ketten n n-ter Ordnung wird der zukünftige Zustand als Funktion der n vorherigen Zuständen berechnet.

### KURZE BESCHREIBUNG DER ZEICHNUNGEN

Im Folgenden werden Beispiele anhand der Zeichnungen näher erläutert. Es zeigen:
Fig. 1 ein System mit getrennten Ultraschallsendern für verschiedene Frequenzen,
Fig. 2 ein System mit einem Ultraschallsender, der abwechselnd Signale unterschiedlicher Frequenzen emittiert,
Fig. 3 ein System mit mehreren Ultraschallsendern für jede von zwei verschiedenen Frequenzen,
Fig. 4 ein System mit mehreren Ultraschallsendern für jede von drei verschiedenen Frequenzen,
Fig. 5 ein System mit einem Ultraschallsender, der abwechselnd Signale dreier verschiedener Frequenzen emittiert,
Fig. 6 ein Blockdiagramm einer Auswerteeinheit,
Fig. 7 ein Blockdiagramm von Funktionen und Sub-Modulen der Auswerteeinheit,
Fig. 8 eine Markow-Kette,
Fig. 9 ein Flussdiagramm eines Verfahrens zur ultraschallbasierten Objekterkennung,
Figur 10 eine Matrix von Einkanal-Objekterkennungsergebnissen, und
Figur 11 zeigt die Schallkegel zweier Ultraschallsignale unterschiedlicher Frequenzen.

### DETAILLIERTE BESCHREIBUNG

Im Folgenden werden einander ähnliche Elemente mit den gleichen Bezugszeichen gekennzeichnet.

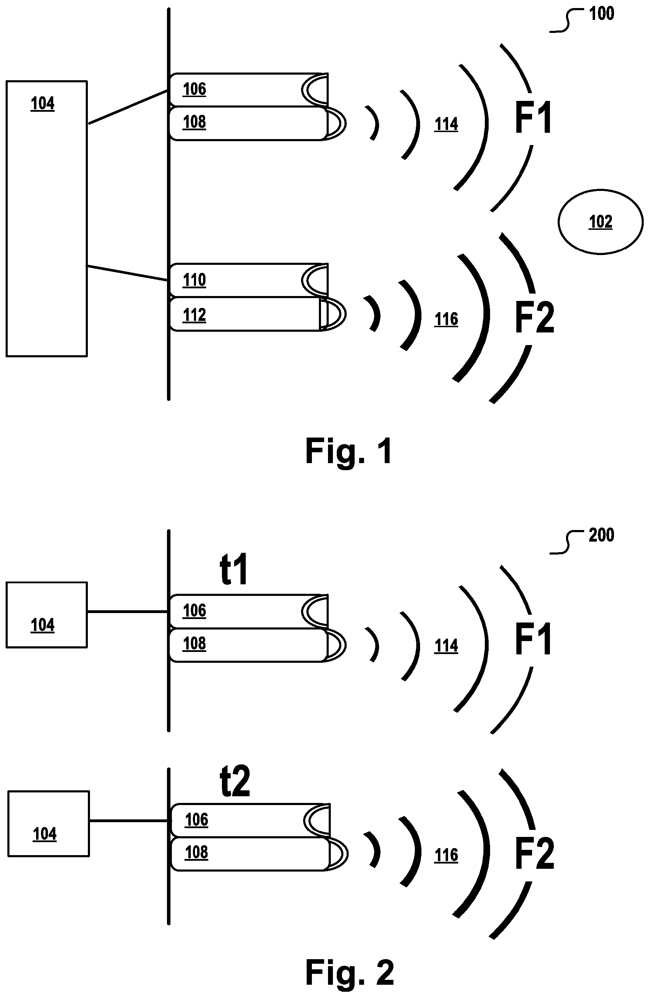

Figur 1 zeigt System 100, welches einen ersten Ultraschallempfänger 106 zum Empfang von Ultraschallechos einer ersten Frequenz (F1) und einen zweiten Ultraschallempfänger 110 zum Empfang von Ultraschallechos einer zweiten Frequenz (F2) umfasst. Die beiden Empfänger können an oder in einem Bauteil befestigt sein, z.B. an oder in der Stoßstange oder eines sonstigen Bauteil eines Fahrzeugs. Die Empfänger 106, 110 sind kommunikativ mit einer Auswerteeinheit 104 verbunden. Die Auswerteeinheit kann als Datenverarbeitungssystem oder Teil eines Datenverarbeitungssystems ausgebildet sein. Die Auswerteeinheit kann zusammen mit den Sensoren und ggf. auch den Ultraschallsendern 108, 112 ein einziges Bauteil darstellen und/oder kann in oder an dem gleichen Bauteil angebracht sein, in oder an welchem bereits die Ultraschallempfänger angebracht sind. Es ist aber auch möglich, dass die Auswerteeinheit ein separates Bauteil ist. Beispielsweise kann die Auswerteeinheit ein Modul einer zentralen Fahrzeugs-Steuerungslogik sein und mit einem Datenbus oder eine sonstige kabelgebundene oder drahtlose Kommunikationsverbindung an die Ultraschallsensoren und/oder Ultraschallsender kommunikativ gekoppelt sein. Das System umfasst außerdem einen ersten Ultraschallsender 108, der dazu konfiguriert ist, Ultraschallsignale 114 der ersten Frequenz (F1) zu emittieren, und einen zweiten Ultraschallsender 112, der dazu konfiguriert ist, Ultraschallsignale 116 der zweiten Frequenz (F2) zu emittieren. Die erste Frequenz ist erfindungsgemäß niedriger als die zweite Frequenz.

Der Empfänger 106 ist also zum Empfang von Echos der Signale 114 des Senders 108 ausgebildet und der Empfänger 110 ist zum Empfang von Echos der Signale 116 des Senders 112 ausgebildet. Das System kann über verschiedene Mechanismen verfügen, um sicherzustellen, dass Kreuzechos vermieden werden, also dass der Empfänger 106 im Wesentlichen nur Echos der ersten Frequenz und der Empfänger 110 im Wesentlichen nur Echos der zweiten Frequenz empfängt. Beispielsweise können das Sender/Empfängerpaar 108/108 und das Sender/Empfängerpaar 110/112 zeitlich alternierend betrieben werden, sodass zu einem beliebigen Zeitpunkt nur Ultraschallsignale und Echos einer der beiden Frequenzen gesendet bzw. empfangen werden können. Alternativ dazu ist der alternierende Einsatz von Filtern, die nur Ultraschallechos einer bestimmten Frequenz bzw. eines bestimmten Frequenzbereichs durchlassen, möglich.

Auch wenn sich im Zuge der Reflektion von Ultraschallwellen an Objekten und/oder aufgrund des Dopplereffekts leichte Unterschiede der Frequenzen des Ursprungssignals 114, 116 und des empfangenen Echos ergeben können, können diese vergleichsweise kleinen Frequenzverschiebungen im Kontext des hier beschriebenen Anwendungszwecks der Objekterkennung und Objektnachverfolgung vernachlässigt werden, sodass hier davon ausgegangen wird, dass die Echosignale des Ultraschallsignals 114 im Wesentlichen die erste Frequenz F1 haben und dass die Echosignale des Ultraschallsignals 116 im Wesentlichen die zweite Frequenz F2 haben.

Der Ultraschallsensor 106 und der Ultraschallsender 108 können als separate Bauteile realisiert sein oder als ein einziges Bauteil (Ultraschalltransceiver). Ebenso können der Ultraschallsensor 110 und der Ultraschallsender 112 als separate Bauteile realisiert sein oder als ein einziges Bauteil.

Fig. 2 zeigt ein System mit einem Ultraschallsender 106, der abwechselnd Signale unterschiedlicher Frequenzen emittiert. Beispielsweise kann gemäß einem vordefinierten zeitlichen Schema der Ultraschallsender während einer ersten Zeitspanne t1 von der Auswerteeinheit 104 dazu veranlasst werden, Ultraschallsignale der ersten Frequenz F1 zu emittieren. Während dieser Zeit t1 empfängt der Ultraschallempfänger 108 Echos der ersten Frequenz und leitet die Echosignale für die Auswertung und Objekterkennung an die Auswerteeinheit 104 weiter. Die Auswerteeinheit führt während t1 eine Einkanal-Objekterkennung auf Basis der Echosignale der ersten Frequenz durch, und führt außerdem eine Mehrkanal-Objekterkennung durch. Dem Schema folgend veranlasst die Auswerteeinheit nach Ablauf der Zeitspanne t1 während einer weiten Zeitspanne t2 das Aussenden von Ultraschallsignalen der zweiten Frequenz F2. Während dieser Zeit t2 empfängt der Ultraschallempfänger 108 Echos der zweiten Frequenz und leitet die Echosignale für die Auswertung und Objekterkennung an die Auswerteeinheit 104 weiter. Die Auswerteeinheit führt während t2 eine Einkanal-Objekterkennung auf Basis der Echosignale der zweiten Frequenz durch, und führt außerdem eine Mehrkanal-Objekterkennung durch. Nach Ablauf der Zeitspanne t2 kann wieder von begonnen werden (Senden und Auswerten von Ultraschallsignalen bzw. Echos der ersten Frequenz während einer Zeitspanne t1).

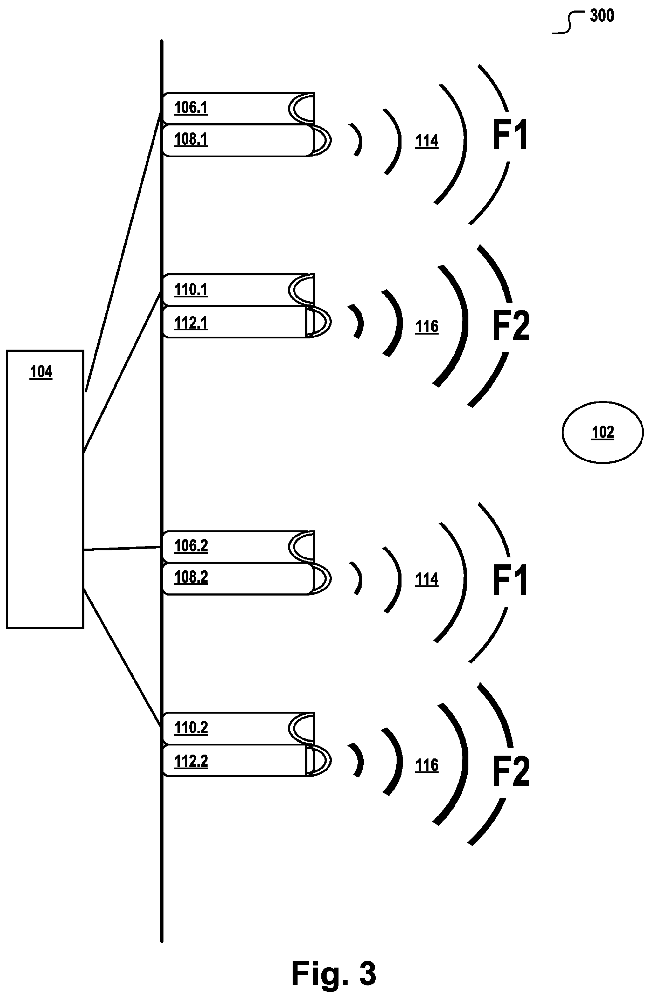

Fig. 3 zeigt ein System mit mehreren Ultraschallsendern 108.1, 108.2 für das Senden von Ultraschallsignalen 114 der ersten Frequenz und mit mehreren anderen Ultraschallsendern 112.1, 112.2 für das Senden von Ultraschallsignalen 116 der zweiten Frequenz. Das System enthält ferner mehrere Empfänger 106.01, 106.2 für den Empfang von Ultraschallechos der ersten Frequenz und weitere Empfänger 110.1, 110.2 für den Empfang von Ultraschallechos der zweiten Frequenz.

Die in Figur 3 gezeigten Sender und Empfänger können z.B. so gesteuert werden, wie dies in Figur 1 im Hinblick auf die entsprechenden Sender und Empfänger beschrieben ist, wobei z.B. alle Sender der Ultraschallsignale der ersten Frequenz gleichzeitig ein Ultraschallsignal dieser Frequenz aussenden und wobei alle Sender der Ultraschallsignale der zweiten Frequenz gleichzeitig ein Ultraschallsignal dieser zweiten Frequenz senden. In anderen Implementierungsvarianten können pro Frequenz auch eine deutlich größere Anzahl von Sendern und Empfängern vorhanden sein, z.B. jeweils 4, 5, 6, 7 oder mehr Sender und/oder Empfänger. Durch Verwendung von mehreren Sendern und Empfängern pro Frequenz kann die räumliche Auflösung der Objekterkennung und auch die Korrektheit der Objekterkennung verbessert werden.

Die in den Figuren 3-4 gezeigten mehreren Sensoren können z.B. als Bestandteile von Ultraschall-Transceivern ausgebildet sein. Jeder Sensor empfängt typischerweise nicht nur die Echosignale des Ultraschallsenders des entsprechenden Transceivers, sondern auch die Echos der Ultraschallsignale anderer Transceiver der gleichen Frequenz. Durch geeignete algorithmische Auswertung der am gleichen Objekt erzeugten Echosignale der mehreren Sender, die jeweils von den Empfängern erfasst werden, ist eine exakte Ortsbestimmung des Objekts möglich.

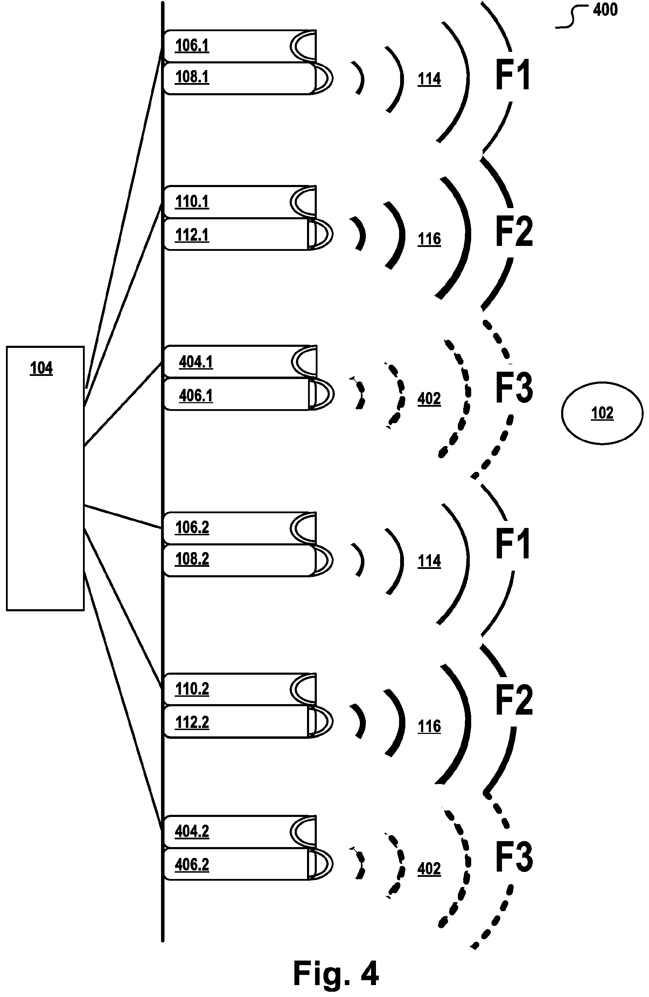

Fig. 4 zeigt ein Blockdiagramm eines Systems mit zwei Ultraschallsendern und zwei Ultraschallempfängern für jede von drei verschiedenen Frequenzen F1, F2 und F3. Beispielsweise kann das Ultraschallsignal 114 die niedrigste Frequenz F1 (und die größte Schallkeule) haben, das Ultraschallsignal 116 kann eine höhere Frequenz F2 (und eine mittelgroße Schallkeule) haben und das Ultraschallsignal 402 kann die höchste Frequenz (und kleinste Schallkeule) haben.

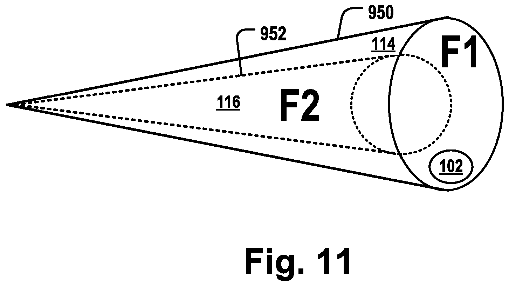

Beispielsweise können die Ultraschallsender der verschiedenen Frequenzen einen Abstand von ca.5 cm bis 50 cm, insbesondere zwischen 10 cm und 40 cm, und insbesondere zwischen 15 cm und 35 cm vom nächsten Sender (der gleichen oder einer anderen Frequenz) haben. Die Schallkeulen der Sender können mehrere Meter, oft mehr als 1 m, insb. mehr als 2m, in manchen Fällen auch mehr als 4 m oder 10 m oder sogar mehr als 20 m lang sein. Oftmals decken die Längen der Schallkeulen einen Raum von bis zu 5 m Entfernung von den jeweiligen Ultraschallsendern ab. Der im Vergleich zu dieser Länge geringe Abstand der Sender bewirkt, dass zumindest einige der Schallkeulen der verschiedenen Sender sich stark überlappen können und teils näherungsweise entlang der gleichen Achse verlaufen (siehe Fig. 11). Insbesondere an den Rändern der überlappenden Schallkeulen kann es zu einer unstetigen, "flackernden" Objekterkennung kommen, also zu einer Situation, in welcher ein Objekt in einem oder einigen Kanälen erkannt wird und in einem oder mehreren anderen Kanälen nicht.

Beispielsweise können während einer ersten Zeitspanne, die einem ersten Zyklus entspricht, nur die Sender 108.1 und 108.2 aktiv sein, um Ultraschallsignale der ersten Frequenz zu emittieren während die anderen Sender keine Signale emittieren. Während einer zweiten, auf die erste folgenden Zeitspanne, die einem zweiten Zyklus entspricht, sind nur die Sender 112.1 und 112.2 aktiv, um Ultraschallsignale der zweiten Frequenz zu emittieren, während die anderen Sender keine Signale emittieren. Während einer dritten, auf die zweite folgenden Zeitspanne, die einem dritten Zyklus entspricht, sind nur die Sender 406.1 und 406.2 aktiv, um Ultraschallsignale der dritten Frequenz zu emittieren, während die anderen Sender keine Signale emittieren.

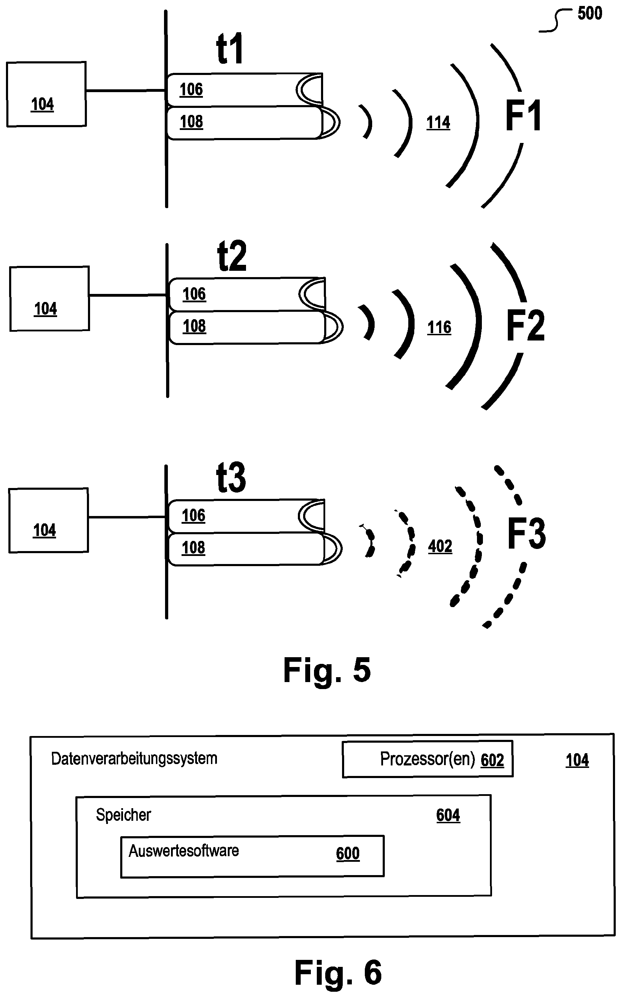

Fig. 5 zeigt ein System mit einem Ultraschallsender, der abwechselnd Signale dreier verschiedener Frequenzen emittiert. Während der Zeitspanne t1, die einem ersten Auswertezyklus entspricht, emittiert der Sender 106 Ultraschallsignale 114 einer ersten Frequenz F1, deren Echo vom Empfänger 108 empfangen und an die Auswerteeinheit für die Durchführung einer Objekterkennung weitergeleitet wird. Während einer auf t1 folgenden Zeitspanne t2, die einem zweiten Auswertezyklus entspricht, emittiert der Sender 106 Ultraschallsignale 116 einer zweiten Frequenz F2, deren Echo vom Empfänger 108 empfangen und an die Auswerteeinheit für die Durchführung der Objekterkennung im zweiten Zyklus weitergeleitet wird. Während einer auf t2 folgenden Zeitspanne t3, die einem dritten Zyklus entspricht, emittiert der Sender 106 Ultraschallsignale 402 einer dritten Frequenz F3, deren Echo vom Empfänger 108 empfangen und an die Auswerteeinheit für die Durchführung einer Objekterkennung weitergeleitet wird. Danach kann der Zyklendurchlauf von vorne begonnen werden und der Sender Ultraschallsignale der ersten Frequenz während eines weiteren Zeitintervalls t1 emittieren.

Fig. 6 ein Blockdiagramm eines Datenverarbeitungssystems 104, welches als Auswerteeinheit 104 ausgebildet ist oder eine solche umfasst. Beispielsweise kann es sich bei dem Datenverarbeitungssystem um einen Microcontroller oder einen Computer mit ein oder mehreren Prozessoren 602 handeln, der über einen flüchtigen oder nicht-flüchtigen Speicher 604 verfügt. In dem Speicher ist ein Softwareprogramm gespeichert, welches die von den Ultraschallempfängern 106, 110, 404 empfangenen Echosignale auswertet, um Objekte zu erkennen und diese nachzuverfolgen, also die Position eines erkannten Objekts über die Zeit hinweg zu bestimmen.

Die Auswerteeinheit kann z.B. ein Bestandteil der zentralen Steuerungslogik eines Fahrzeugs sein oder ein separates Bauteil, welches ggf. die Ergebnisse der Objekterkennung an die zentrale Steuerungslogik übermitteln kann, damit diese ggf. Brems- und Ausweichmanöver einleiten oder Warnmeldungen an den Fahrer ausgeben kann. Die Echosignale werden von der Software 600 auf das Vorhandensein bestimmter Signalverlaufscharakteristika untersucht, also z.B. daraufhin, ob die Amplitude des Ultraschallechos an einem bestimmten Bereich einen Grenzwert überschreitet. Die Aufgabe, ein Objekt zu erkennen, kann so ausgebildet sein, dass eine ungefähre, im Wesentlichen auf Echoamplitudengrenzwerten beruhende Objekterkennung auf Basis z. B. von Einkanal- und Mehrkanal-Objekterkennungen von dem Ultraschallsystem 100, 200, 300 und seiner Auswerteeinheit 104 vorgenommen werden und die Ergebnisse dieser Objekterkennung zur Weiterverarbeitung an eine zentrale Steuerungslogik des Fahrzeugs übermittelt werden.

In einer Implementierungsvariante ist die Gesamtheit der Ultraschallsensoren und Empfänger in Form einer Sensoranordnung implementiert, welche die Auswerteeinheit 104 umfasst, wobei die Auswerteeinheit als Slave/Satelliteneinheit fungiert, die mit einer zentralen Fahrzeugsteuerungslogik, die als Master/Zentraleinheit fungiert, interoperabel ist. Die Auswerteeinheit ist über einen Bus mit der Zentraleinheit verbunden.

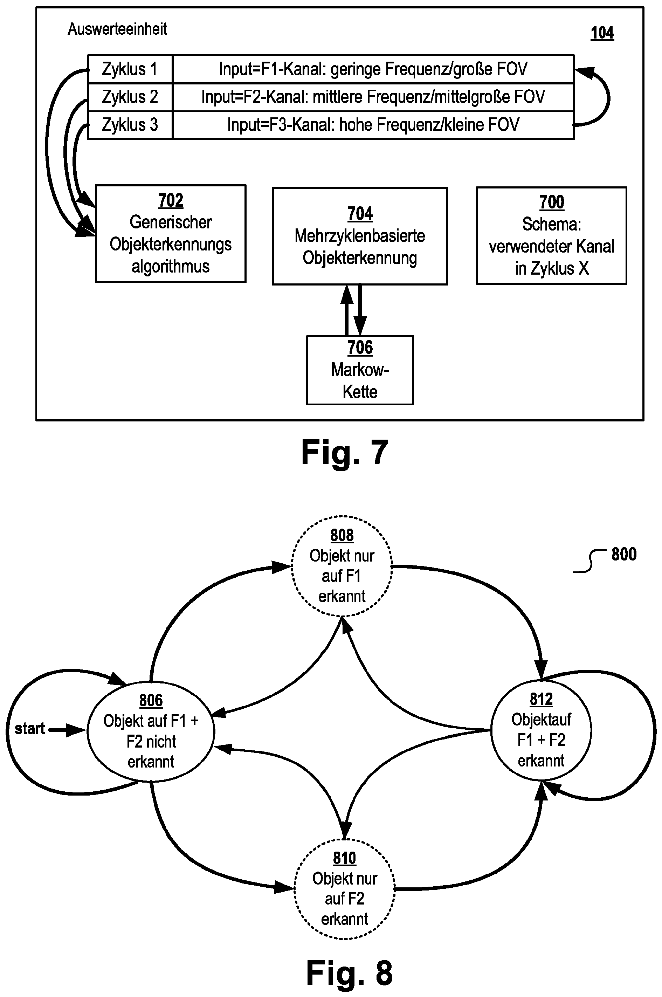

Fig. 7 zeigt ein Blockdiagramm von Funktionen und Sub-Modulen der Auswerteeinheit 104 gemäß einer möglichen Implementierungsvariante. Die Auswerteeinheit ist dazu konfiguriert, zyklisch eine Objekterkennung in Ultraschallechos genau einer von mehreren Frequenz durchzuführen, wobei sich die Frequenzen der aktuell analysierten Echos von Zyklus zu Zyklus gemäß eines vordefinierten Schemas 700 ändern. Beispielsweise kann das in Figur 7 exemplarisch gezeigte Schema vorsehen, dass in einem ersten Zyklus nur die Echos einer ersten Frequenz (F1) analysiert werden. Diese Echosignale werden auch "F1-Kanal" oder "F1-Kanalsignale" genannt. In einem zweiten Zyklus werden nur die Echos einer zweiten Frequenz (F2) analysiert. Diese Echosignale werden auch "F2-Kanal" oder "F2-Kanalsignale" genannt. In einem dritten Zyklus werden nur die Echos einer dritten Frequenz (F3) analysiert. Diese Echosignale werden auch "F3-Kanal" oder "F3-Kanalsignale" genannt. Es gibt verschiedene Mechanismen, wie das System sicherstellen kann, dass immer nur eine der mehreren Frequenzen analysiert wird (siehe Beschreibungen der Figuren 1-5). Beispielsweise kann die Auswerteeinheit dazu konfiguriert sein, die verschiedenen Sender der verschiedenen Frequenzen gemäß des Schemas 700 auszuwählen und zur Emission entsprechender Ultraschallsignale zu veranlassen. Alternativ dazu kann die Auswerteeinheit den Einsatz von Frequenzfiltern im zyklischen Wechsel so steuern, dass im aktuellen Zyklus nur die Echos einer Frequenz an die Auswerteeinheit weitergeleitet und dort zur Objekterkennung genutzt werden. Der Auswerteeinheit ist also bekannt, welche Frequenz im aktuell ausgeführten Zyklus das aktuell empfangene Echosignal hat, und ob dieses eine höhere Sensitivität hat bezüglich der Objekterkennung als andere Zyklen, die zu anderen, höherfrequenten Echos korrespondieren.

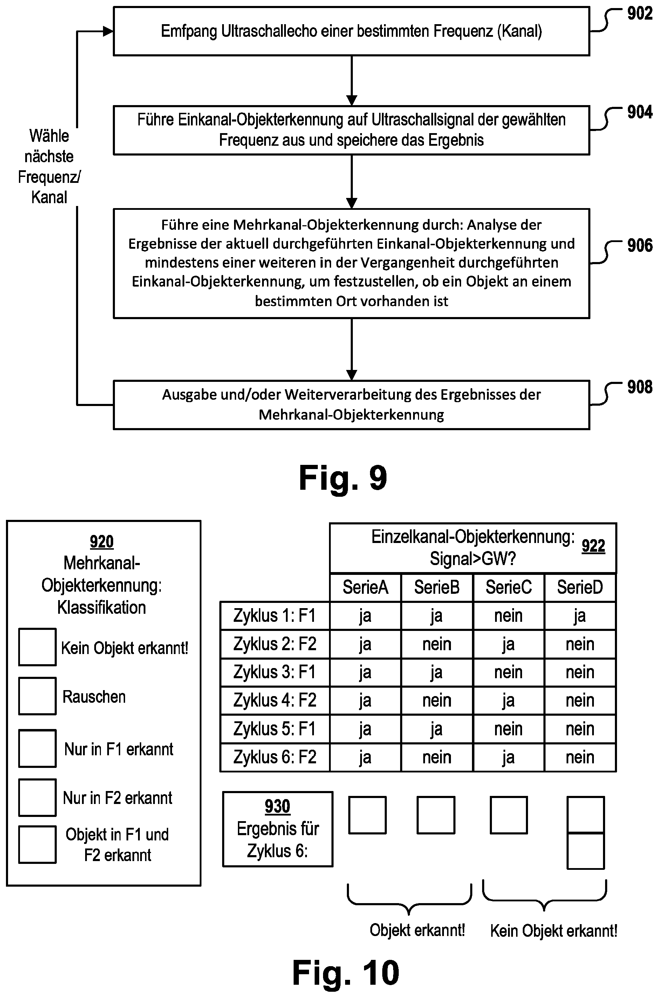

Obwohl also die in den verschiedenen Zyklen analysierten Echos unterschiedliche Frequenzen und in der Regel auch unterschiedlich dimensionierte Schallkeulen aufweisen, verwendet die Auswerteeinheit 104 vorzugsweise einen generischen Algorithmus 702 zur Objekterkennung, der keine Anpassungen bezüglich der erwarteten Dimensionen der Schallkeule aufweist. Dies kann allerdings dazu führen, dass insbesondere Objekte am Rande der Schallkeulen oder Objekte, die nur in einer bestimmten Frequenz ein starkes Echosignal liefern, im Wechsel der Auswertezyklen nur "flackernd" erkannt werden. Durch eine Mehrkanal-Objekterkennung 704, die auch ein oder mehrere Ergebnisse vorhergehender Einkanal-Objekterkennungen berücksichtigt, können auch Objekte, die nur "flackernd" in einem von mehreren Kanälen erkannt werden, zuverlässig erkannt und nachverfolgt werden. Die Mehrkanal-Objekterkennung 704 kann z.B. mehrere Schritte umfassen, wobei der erste Schritt eine Einkanal-Objekterkennung auf Basis der Ultraschallechos des gerade aktiv analysierten Kanals sein kann. Die Mehrkanal-Objekterkennung kann z.B. als regelbasierter Algorithmus, der eine Ergebnismatrix auswertet, implementiert sein, wie dies in Figuren 10 und 11 gezeigt ist. Gemäß manchen Implementierungsvarianten kann eine Markow-Kette, wie sie in Figur 8 gezeigt ist, dazu verwendet werden, Mehrkanal-Objekterkennungsergebnisse auf Basis von Sequenzen zuvor ermittelter Einkanal-Objekterkennungsergebnissen zu berechnen.

Fig. 8 ist eine Illustration einer Markow-Kette 800, welche zur Mehrkanal-Objekterkennung verwendet werden kann. Die Markow-Kette umfasst mehrere Zustände 806-812, zum Beispiel:
- Zustand 806, repräsentierend das Ergebnis einer Mehrkanal-Objekterkennung: "Objekt in Mehrkanal-Objekterkennung weder auf Basis der ersten (F1) noch der zweiten Frequenz (F2) erkannt";
- Zustand 808, repräsentierend das Ergebnis einer Mehrkanal-Objekterkennung: "Objekt in Mehrkanal-Objekterkennung nur auf Basis der ersten Frequenz (F1) erkannt";
- Zustand 810, repräsentierend das Ergebnis einer Mehrkanal-Objekterkennung: "Objekt in Mehrkanal-Objekterkennung nur auf Basis der zweiten Frequenz (F2) erkannt";
- Zustand 812, repräsentierend das Ergebnis einer Mehrkanal-Objekterkennung: "Objekt in Mehrkanal-Objekterkennung sowohl auf Basis der ersten (F1) als auch der zweiten Frequenz (F2) erkannt".

Jeder dieser Zustände 806-812 wiederum ist das Ergebnis der Anwendung des prädiktiven Modells auf einer Sequenz von Ergebnissen mehrerer aufeinander folgender Einkanal-Objekterkennungen verschiedener wechselnder Frequenzen. Bei zwei unterschiedlichen Frequenzen kann eine solche Sequenz z.B. aussehen wie folgt:
Sequenz 1: F1+|F2+| F1+|F2+| F1+|F2+| F1+|F2+| F1+|F2+ |
Sequenz 2: F1+|F2-| F1+|F2-| F1+|F2-| F1+|F2-| F1+|F2-|
Sequenz 3: F1-|F2+| F1-|F2+| F1-|F2+| F1-|F2+| F1-|F2+|
Sequenz 4: F1-|F2-| F1-|F2-| F1-|F2-| F1-|F2-| F1-|F2-|

In der Sequenz (oder "Serie") 1 wird das Objekt in beiden Kanälen erkannt, in der Sequenz 4 in keinem der Kanäle, in der Sequenz 2 nur in F1 und in Sequenz 3 nur in F2. Die Sequenzen 2 und 3 repräsentieren also ein "flackerndes" Erkennen. In der Praxis werden die Sequenzen nicht immer so eindeutig aussehen. In der Regel wird es auch bei relativ stabiler Ausprägung zumindest abschnittsweise Übergänge zwischen diesen "idealisierten" vier Frequenztypen geben, es wird Unregelmäßigkeiten und "Ausreißer" geben. Im Zuge des maschinellen Lernens lernt das Modell, wie stark eine Sequenz von den oben skizzierten Frequenzen 1-4 abweichen darf, um das entsprechende Mehrkanal-Objekterkennungsergebnis zu liefern. Vorzugsweise gehen auch Informationen bezüglich der absoluten oder relativen Amplituden, die als Annotationen in den Trainingsdaten den Ergebnissen der Einkanal-Objekterkennungen zugewiesen sein können und die als Input bei der Einkanal- und Mehrkanal-Objekterkennung der Auswerteinheit bereitgestellt werden, in das trainierte Modell bzw. in das vom trainierten Model berechnete Ergebnis ein.

In manchen Beispielen sind die Zustände sind in der Markow-Kette durch Kanten ("Pfade) miteinander verbunden, wobei den Kanten Übergangswahrscheinlichkeiten zugewiesen sind. Die Übergangswahrscheinlichkeiten können z.B. durch Analyse historischer Ergebnisdaten von Einkanal-Objekterkennungsergebnissen und Mehrkanal-Objekterkennungsergebnissen einer Vielzahl von nacheinander durchgeführten Zyklen gewonnen werden, die z.B. in Form eines Trainingsdatensatzes bereitgestellt werden können. Beispielsweise bezeichnet die Übergangswahrscheinlichkeit des Pfads, der durch den Pfeil von Knoten 806 auf 808 zeigt, die Wahrscheinlichkeit, dass ausgehend von dem Zustand, dass in einem aktuell analysierten Kanal weder in diesem noch im zuvor analysierten Kanal ein Objekt erkannt wurde, im nächsten Zyklus das Objekt auf Basis eines Echosignals der Frequenz F1 erkannt werden wird, wobei z.B. die Ergebnisse der letzten n Einkanal-Objekterkennungen dem jeweiligen Zustand z.B. als Merkmalsvektor zugewiesen sein können. Die Zustände, die Einzelkanal-Objekterkennungsergebnisse repräsentieren, können z.B. durch Vergleich der Echoamplitude mit einem Grenzwert ermittelt werden: hat das Echosignal in einem bestimmten räumlichen Bereich eine Amplitude, die höher ist als ein vordefinierter Mindestwert, wird als Ergebnis der Objekterkennung der Zustand "Objekt (in dem aktuellen Kanal) erkannt" zurückgegeben.

Der Zustand 812 beinhaltet, dass das Objekt sowohl auf Basis des Ultraschallechos der ersten, niedrigeren Frequenz F1 als auch auf Basis der zweiten, höheren Frequenz erkannt wird (stetige bzw. stabile Objekterkennung in mehreren Kanälen). Der Zustand 808 beinhaltet, dass das Objekt zwar auf Basis des Ultraschallechos der ersten, niedrigeren Frequenz F1 erkannt wird, nicht jedoch auf Basis der höheren Frequenz F2 ("flackernde" Objekterkennung). Der Zustand 802 beinhaltet, dass das Objekt weder auf Basis des Ultraschallechos der ersten Frequenz F1 noch auf Basis der zweiten Frequenz F2 erkannt wird (stabil kein Objekt erkannt).

Jeder Übergang von einem ein Zustand zu einem anderen korrespondiert zu einem neuen Zyklus bzw. der Analyse des Echos einer anderen der vordefinierten Frequenzen gemäß Schema

Das in Figur 8 gezeigte Markow-Kette kann für die Modellierung von Systemen verwendet werden, die zwei unterschiedliche Frequenzen F1, F2 unterstützen. Bei Verwendung weiterer Frequenzen wird die Zahl der Zustände und Kanten entsprechend erweitert und um entsprechende Übergangswahrscheinlichkeiten ergänzt.

Fig. 9 zeigt ein Flussdiagramm eines Verfahrens zur ultraschallbasierten Objekterkennung. Das Verfahren kann z.B. verwendet werden, um Fahrzeuge mit einer Einparkhilfe zu versehen, um verschiedene Fahrer-Assistenzsysteme zu unterstützen, welche z.B. ein autonomes oder teilautonomes oder assistiertes Fahren ermöglichen sollen. Beispielsweise können bei aktuellem oder vorhergesagtem Unterschreiten eines Mindestabstands zwischen Fahrzeug und Objekt automatisch Warnsignale an den Fahrer ausgegeben und/oder Brems- oder Ausweichvorgänge eingeleitet werden.

Das Verfahren wird zyklisch wiederholt durchgeführt, wobei in jedem Zyklus nur die Ultraschallechos einer einzigen von mehreren vordefinierten Frequenzen ausgewertet werden bzw. wobei pro Zyklus immer nur ein frequenzspezifischer Kanal aktiv ist. Der zyklische Wechsel der mehreren Frequenzen findet entsprechend eines vordefinierten Schemas statt.

In einem Schritt 902 empfangen ein oder mehrere Ultraschallempfänger Ultraschallechos der gerade aktuellen/aktiven Frequenz. So können z.B. in einem ersten Zyklus zunächst Ultraschallechos einer ersten Frequenz durch ein oder mehrere erste Ultraschallempfänger 106 empfangen und an die Auswerteeinheit 104 weitergeleitet werden.

In Schritt 904 führt die Auswerteeinheit 104 eine Einkanal-Objekterkennung auf Basis des in Schritt 902 empfangenen Echos durch, um ein Objekt 102 zu erkennen.

Die Auswerteeinheit führt sodann in Schritt 906 eine Mehrkanal-Objekterkennung durch. Während der Mehrkanal-Objekterkennung analysiert die Auswerteeinheit die Ergebnisse der aktuell durchgeführten Einkanal-Objekterkennung und mindestens einer weiteren in der Vergangenheit durchgeführten Einkanal-Objekterkennung im Ultraschallecho einer anderen der mehreren Frequenzen mit dem Ziel der Erkennung des Objekts.

Beispielsweise kann die Einkanal- und Mehrkanal-Objekterkennung kombiniert erfolgen, z.B. auf Basis einer Markow-Kette. Oder es können die Ergebnisse der Einkanal-Objekterkennungen mehrerer Zyklen und mehrerer Frequenzen zunächst gespeichert werden, um diese dann mittels Regeln zu analysieren und ein Mehrkanal-Objekterkennungs-ergebnis zurückzugeben, welches die Ergebnisse mehrerer Einkanal-Objekterkennungen mehrerer Zyklen und Frequenzen integriert.

Das Ergebnis der Mehrkanal-Objekterkennung wird als das Ergebnis der ultraschallbasierten Objekterkennung des aktuellen Zyklus in Schritt 908 zurückgegeben.

Beispielsweise kann dieses wiederum dazu verwendet werden, um einen Objektnachverfolgungsalgorithmus auf Basis des Ergebnisses der Mehrkanalobjekterkennung dynamisch zu wählen. Falls das Ergebnis der Mehrkanal-Objekterkennung beispielsweise ergibt, dass das Objekt konstant über mehrere Zyklen und in mehreren oder allen der vordefinierten Frequenzen erkannt wird, kann ein rechnerisch weniger aufwändiger, z.B. auf Abstands-Grenzwerten beruhender Algorithmus zur Objektnachverfolgung über die Zeit verwendet werden. Falls das Ergebnis der Mehrkanal-Objekterkennung aber beispielsweise ergibt, dass das Objekt nur "flackernd" erkannt wird, also z.B. nur im F1 Kanal, nicht aber im F2 Kanal, kann ein rechnerisch aufwändiger Algorithmus zur Objektnachverfolgung ausgeführt werden, der z.B. eine Vorhersage der Position des Objekts in einem künftigen Zyklus umfasst und einen Abgleich des Abstands der gemessenen von der vorhergesagten Objektposition mit dem Abstands-Grenzwert.

Sodann können in einem zweiten Zyklus Ultraschallechos einer zweiten Frequenz F2 durch ein oder mehrere zweite Ultraschallempfänger 110 empfangen und an die Auswerteeinheit weitergeleitet werden, und die Schritte 902-908 auf Basis der Echos der zweiten Frequenz wiederholt werden. Danach kann, je nach Anzahl der unterstützten Frequenzen, wieder mit der F1 Frequenz begonnen werden, oder es wird ein Zyklus für die dritte, vierte bzw. n-te Frequenz gemäß des vordefinierten Schemas durchgeführt.

Das zyklische Wechseln der Frequenzen bzw. Kanäle kann den zyklischen Einsatz verschiedener Sender oder Filter beinhalten, wie dies z.B. im Hinblick auf die Figuren 1-5 beschrieben wurde.

Figur 10 eine Matrix von Einkanal-Objekterkennungsergebnissen, wie sie in einer Implementierungsvariante beobachtet wurden. Auf der rechten Seite wurde in einem ersten Testlauf ("Serie A") ein System, welches mehrere erste Ultraschall- Transceiver für eine erste Frequenz F1 und mehrere zweite Ultraschall-Transceiver für eine höhere, zweite Frequenz F2 umfasst, dazu verwendet, um die Anwesenheit eines Objekts in der Nähe der Transceiver über eine Serie von 6 Zyklen hinweg zu erkennen, wobei in den Zyklen 1, 3 und 5 jeweils der erste Kanal/die erste Frequenz aktiv war bzw. ausgewertet wurde und in den Zyklen 2, 4 und 6 jeweils der zweite Kanal/die zweite Frequenz aktiv war bzw. ausgewertet wurde.

In der ersten Testreihe ("Serie A") wurde das Objekt im Zentrum des Raumes aufgestellt, welcher von den beiden räumlich weitgehend überlappenden Schallkeulen der ersten und zweiten Transceiver abgedeckt wurde. Das Objekt wurde in beiden Kanälen zuverlässig erkannt (Einkanal-Objekterkennungsergebnis immer "ja" in Serie A). Das Ergebnis der Mehrkanal-Objekterkennung dieser Testserie ist entsprechend "Objekt konstant in F1 und F2 erkannt". Das Objekt gilt als erkannt bzw. vorhanden.

In der zweiten Testreihe ("Serie B") wurde das Objekt knapp außerhalb der Schallkeule der zweiten Frequenz aber noch innerhalb der Schallkeule der ersten Frequenz positioniert, wie dies beispielsweise in Figur 11 gezeigt ist. Das Objekt wurde im F1-Kanal zuverlässig erkannt (Einkanal-Objekterkennungsergebnis fast immer "ja" im F1 Kanal und immer "nein" im F2 Kanal in Serie B). Das Ergebnis der Mehrkanal-Objekterkennung dieser Testserie ist entsprechend "Objekt flattert/Objekt nur in F1-Kanal, nicht in F2-Kanal erkannt". Das Objekt gilt als erkannt bzw. vorhanden, es wird aber ggf. ein rechnerisch aufwändigerer Algorithmus zur Objektnachverfolgung verwendet als in der Testserie A.

Bei der dritten Testreihe ("Serie C") handelt es sich um ein Artefakt, welches zumindest in einer Konfiguration wie in Figur 11 gezeigt nicht auftreten sollte, da die Schallkeule für F1 größer ist als für F2 (unter der Annahme, dass das Objekt beide Frequenzen gleichermaßen reflektiert). Das in Serie C gezeigte Muster sollte also in der Realität nicht auftreten und wird hier so interpretiert, dass das Objekt nicht vorhanden ist und dass ggf. eine Störung in der Objekterkennung, ein Störsignal oder eine sonstige Fehlerursache vorliegt. Das Ergebnis der Mehrkanal-Objekterkennung dieser Testserie ist entsprechend "Kein Objekt erkannt".

In der vierten Testreihe ("Serie D") wurde das Objekt knapp außerhalb der Schallkeule beider Frequenzen positioniert. Das Objekt wurde in beiden Kanälen nicht erkannt (immer "nein" im F1 und F2 Kanal in Serie D). Das Ergebnis der Mehrkanal-Objekterkennung dieser Testserie ist entsprechend "Kein Objekt erkannt".

Außerdem kann die Auswerteeinheit dazu konfiguriert sein, als Ergebnis "Rauschen" zurückzugeben, falls mehrfach Objekte zumindest in einem der Kanäle erkannt werden, wenn diese aber mehr als eine vordefinierte Höchstzahl von nachfolgenden Zyklen nicht nachverfolgt werden können. Dies kann z.B. geschehen, wenn vorhergesagt wird, dass sich in einem ersten Zyklus erkanntes Objekt im zweiten Zyklus an Position P2, im dritten Zyklus an Position P3 und im vierten Zyklus an Position P4 befinden wird, wenn aber z.B. für mehr als zwei vorhergesagte künftige Positionen in den entsprechenden künftigen Zyklen kein Objekt an dieser Position bzw. in hinreichender räumlicher Nähe zu dieser Position befindet bzw. erkannt wird. Beispielsweise kann die Auswerteeinheit einen Zähler umfassen, der die Anzahl der aufeinanderfolgenden Zyklen, in welchen ein zuvor erkanntes Objekt nicht mehr an seiner vorhergesagten Position erkannt wird, zählt, und bei Überschreiten einer vordefinierten Maximalzahl als Mehrkanal-Objekterkennungs-Ergebnis "Rauschen" und/oder "Kein Objekt erkannt" zurückgibt.

Figur 11 zeigt die Schallkegel zweier Ultraschallsignale unterschiedlicher Frequenzen. In dem hier gezeigten Beispiel ist der Schallkegel 950 des Ultraschallsignals 114 der ersten, niedrigeren Frequenz F1 größer als der Schallkegel 952 des Ultraschallsignals 116 der zweiten, höheren Frequenz F2. Falls das zu erkennende Objekt 102, z.B. ein Gegenstand oder eine Person, sich wie hier gezeigt, am Rande oder außerhalb des F2 Schallkegels 952 befindet, aber noch innerhalb des F1 Schallkegels 950, kann es zu einer "flatternden" Objekterkennung in den beiden F1, F2 Kanälen kommen. Eine ähnliche Situation kann auftreten, falls das Material Ultraschallsignale der ersten Frequenz stark reflektiert (also ein Echo erzeugt), nicht jedoch Ultraschallsignale der zweiten Frequenz.

In den hier beschriebenen Beispielen wird der Einfachheit davon ausgegangen, dass es im Wesentlichen um die Erkennung eines Objekts innerhalb des Bereichs, von welchem Echosignale empfangen werden geht. Beispielsweise kann ein Objekt im Zuge einer Einkanal-Objekterkennung dann als erkannt gelten, wenn die Amplitude des Echos in einem räumlichen Bereich oberhalb eines vordefinierten Grenzwerts liegt. Es is aber auch möglich, dass mehrere Objekte in einem Echosignal erkannt werden. Die Objekterkennung kann die (zumindest ungefähre) Bestimmung der Position des Objekts bzw. der Objekte umfassen. Beispielsweise können hierfür im Stand der Technik bekannte Verfahren verwendet werden, um aus den von einem oder mehreren Ultraschallsensoren empfangenen Echos die Position des Objekts, welches das Echo erzeugt hat, zu bestimmen.

### LISTE DER BEZUGSZEICHEN

- 100: System
- 102: Objekt
- 104: Auswerteeinheit
- 106: Ultraschallempfänger
- 108: Ultraschallsender
- 110: Ultraschallempfänger
- 112: Ultraschallsender
- 114: Ultraschallsignal der Frequenz F1
- 116: Ultraschallsignal der Frequenz F2
- 200: System
- 300: System
- 400: System
- 402: Ultraschallsignal der Frequenz F3
- 404: Ultraschallempfänger
- 406: Ultraschallsender
- 500: System
- 600: Auswertesoftware
- 602: Prozessor(en)
- 604: Speicher
- 700: Schema der Kanalverwendung
- 702: Generischer Objekterkennungsalgorithmus
- 704: Mehrkanal-Objekterkennung
- 706: Markow-Kette
- 800: Markow-Kette
- 806: Zustand
- 808: Zustand
- 810: Zustand
- 812: Zustand
- 902-908: Schritte
- 920: Mehrkanal-Objekterkennung
- 922: Einkanal-Objekterkennungsergebnisse
- 950: Ränder der Schallkeule der ersten Frequenz F1
- 952: Ränder der Schallkeule der ersten Frequenz F2

## Patentansprüche

1. Ein System (100, 200, 3000, 400, 500) zur ultraschallbasierten Objekterkennung, umfassend:
- mehrere Ultraschallempfänger (106, 110, 404), die dazu konfiguriert sind, Ultraschallechos mindestens zweier unterschiedlicher Frequenzen zu empfangen;
- eine Auswerteeinheit (104), die dazu konfiguriert ist,
• zyklisch eine Einkanal-Objekterkennung durchzuführen, wobei die Einkanal-Objekterkennung eine Analyse des Ultraschallechos einer der Frequenzen zur Erkennung eines Objekts (102) umfasst, wobei im Laufe der Einkanal-Objekterkennung für mehrere der Zyklen die mehreren Frequenzen alternierend gemäß eines vordefinierten Schemas (700) verwendet werden; und
• in mehreren der Zyklen jeweils pro Zyklus eine Mehrkanal-Objekterkennung durchzuführen, wobei eine Mehrkanal- Objekterkennung eine Analyse der Ergebnisse der aktuell durchgeführten Einkanal-Objekterkennung und mindestens einer weiteren in der Vergangenheit durchgeführten Einkanal- Objekterkennung im Ultraschallecho einer anderen der mehreren Frequenzen mit dem Ziel der Erkennung des Objekts ist, und das Ergebnis der Mehrkanal-Objekterkennung als das Ergebnis der ultraschallbasierten Objekterkennung des aktuellen Zyklus auszugeben, wobei die mehreren verschiedenen Frequenzen zumindest eine erste Frequenz (F1) und eine zweite Frequenz (F2) umfassen, wobei die erste Frequenz niedriger ist als die zweite Frequenz, **dadurch gekennzeichnet, dass** die Auswerteeinheit dazu konfiguriert ist, in der Mehrkanal-Objekterkennung eines aktuell ausgeführten Zyklus als Ergebnis zurückzugeben, dass das Objekt vorhanden ist, wenn über eine Mindestanzahl an bereits ausgeführten Zyklen hinweg, in welchen jeweils Ultraschallechos der ersten Frequenz analysiert wurden, das Objekt in der Einkanalobjekterkennung dieser Zyklen erkannt wurde, wobei dieses Ergebnis auch dann zurückgegeben wird, wenn im letzten Zyklus, in welchem Ultraschallechos der zweiten Frequenz analysiert wurden, das Objekt nicht erkannt wurde.

2. System nach Anspruch 1, ferner umfassend mehrere Ultraschallsender (108, 112, 406), die dazu konfiguriert sind, Ultraschallsignale (114, 116, 402) einer ersten der mehreren Frequenzen und einer zweiten der mehreren Frequenzen zu emittieren, wobei die Ultraschallechos aufgrund einer Reflektion von dem Objekt aus den Ultraschallsignalen resultieren.

3. System nach Anspruch 2, wobei die mehreren Ultraschallsender jeweils dazu konfiguriert sind, für die Ultraschallsignale einer einzelnen spezifischen der mehreren unterschiedlichen Frequenzen zu emittieren.

4. System nach Anspruch 2 oder 3, wobei die mehreren Ultraschallsender dazu konfiguriert sind, zyklisch alternierend die Ultraschallsignale unterschiedlicher der mehreren unterschiedlichen Frequenzen zu emittieren, wobei pro Zyklus immer nur Signale einer der mehreren unterschiedlichen Frequenzen emittiert werden.

5. System nach einem der Ansprüche 2-4, ferner umfassend eine Kontrolleinheit,
- wobei die Kontrolleinheit dazu konfiguriert ist, die mehreren Ultraschallsender im Laufe der mehreren Zyklen alternierend zum Senden der Ultraschallsignale mit einem Sendeschema anzusteuern, sodass innerhalb eines der Zyklen vorzugsweise immer nur Ultraschallsignale einer einzigen der mehreren unterschiedlichen Frequenzen gleichzeitig emittiert werden,
- wobei das für die Analyse verwendete vordefinierte Schema dem Sendeschema entspricht.

6. System nach einem der vorigen Ansprüche, wobei die Einkanal-Objekterkennung einen Algorithmus für die Erkennung eines Objekts (102) in einem Ultraschallecho verwendet, welcher für jede der mehreren verschiedenen Frequenzen unabhängig von den Schallkeulendimensionen der mehreren verschiedenen Frequenzen ist.

7. System nach einem der vorigen Ansprüche, wobei die Auswerteeinheit dazu konfiguriert ist, in der Mehrkanal-Objekterkennung eines aktuell ausgeführten Zyklus als Ergebnis zurückzugeben, dass das Objekt nicht vorhanden ist, wenn über eine Mindestanzahl an bereits ausgeführten Zyklen hinweg, in welchen jeweils Ultraschallechos der ersten Frequenz analysiert wurden, das Objekt in der Einkanalobjekterkennung dieser Zyklen nicht erkannt wurde, wobei dieses Ergebnis auch dann zurückgegeben wird, wenn im letzten Zyklus, in welchem Ultraschallechos der zweiten Frequenz analysiert wurden, das Objekt erkannt wurde.

8. System nach einem der vorigen Ansprüche, wobei die Auswerteeinheit dazu konfiguriert ist, eine oder mehrere der folgenden Aktionen in Abhängigkeit vom Ergebnis der Mehrkanal-Objekterkennung auszuführen:
- Auswahl von einem von mehreren verfügbaren, zyklenübergreifenden Algorithmen zur räumlichen Nachverfolgung des Objekts;
- Anzeige des Objekts, falls es erkannt wurde;
- Ausgabe einer Warnung oder eines Alarmsignals bezüglich der Anwesenheit des Objekts;
- Einleiten eines automatischen oder halb-automatischen Fahr-Manövers zum Umfahren des Objekts.

9. System nach einem der vorigen Ansprüche, wobei die Einkanal-Objekterkennung als Funktion der folgenden Eingangsdaten durchgeführt wird:
- Amplitude des empfangenen Ultraschallechos der aktuell ausgewerteten Frequenz;
- Indikator eines Unterschieds der Amplitude der Ultraschallechos der aktuell ausgewerteten Frequenz von der Amplitude der Ultraschallechos einer anderen der verschiedenen Frequenzen, wobei der Indikator insbesondere eine Differenz oder ein Verhältnis der Amplituden ist;
- Indikator eines Unterschieds der Amplitude der Ultraschallechos der aktuell ausgewerteten Frequenz von der Amplitude eines aktuell erfassten Bodenechos, wobei der Indikator insbesondere eine Differenz oder ein Verhältnis der Amplituden ist.

10. System nach Anspruch 8 oder 9, wobei
- die räumliche Nachverfolgung des Objekts im Falle des Mehrkanal-Objekterkennungsergebnisses "kanalübergreifend erkannt" einen Abgleich der Position des aktuell erkannten Objekts mit der Position des Objekts, die im unmittelbar zuvor ausgeführten Zyklus ermittelt wurde, umfasst, um festzustellen, ob ein Abstand der im unmittelbar zuvor ausgeführten Zyklus ermittelten Position des Objekts von der aktuell festgestellten Position des Objekts unterhalb eines Grenzwerts liegt; und/oder
- die räumliche Nachverfolgung des Objekts im Falle des Mehrkanal-Objekterkennungsergebnisses "nur F1-Einkanalbasiert erkannt" umfasst:
• Vorhersage der künftigen Position des Objekts anhand Positionsdaten des Objekts, die bei der Analyse der Ultraschallechos der ersten Frequenz im aktuellen und ein oder mehreren zuvor ausgeführten Zyklen erkannt wurden;
• Im nächsten Zyklus, in welchem Ultraschallsignale der ersten Frequenz analysiert werden, Abgleich anhand der aktuell analysierten Ultraschallechos erhaltenen Positionsdaten des Objekts mit der vorhergesagten Position, um festzustellen, ob ein Abstand der vorhergesagten Position des Objekts von der aktuell festgestellten Position des Objekts unterhalb eines Grenzwerts liegt;
wobei die Auswerteeinheit dazu konfiguriert ist, falls der Positionsabstand unterhalb des Grenzwerts liegt, das in den verschiedenen Zyklen erkannte Objekt als identisches Objekt zu behandeln, und andernfalls die Existenz zweier unterschiedlicher Objekte oder ein Rauschsignal als Ergebnis der Nachverfolgung zurückzugeben.

11. System nach einem der vorigen Ansprüche, wobei die Auswerteeinheit ein trainiertes prädiktives Modell zur Durchführung der Mehrkanal-Objekterkennung verwendet, wobei das trainierte prädiktive Modell insbesondere eine Markow-Kette (706, 800) ist.

12. System nach Anspruch 11, wobei die das trainierte prädiktive Modell die Markow-Kette (706, 800) ist, wobei die Markow-Kette die folgenden Zustände umfasst:
- einen Zustand "Objekt in Mehrkanal-Objekterkennung weder auf Basis der ersten (F1) noch der zweiten Frequenz (F2) erkannt" (806);
- einen Zustand "Objekt in Mehrkanal-Objekterkennung nur auf Basis der ersten Frequenz (F1) erkannt" (808);
- einen Zustand "Objekt in Mehrkanal-Objekterkennung nur auf Basis der zweiten Frequenz (F2) erkannt" (810);
- einen Zustand "Objekt in Mehrkanal-Objekterkennung sowohl auf Basis der ersten (F1) als auch der zweiten Frequenz (F2) erkannt" (812), wobei die Zustände jeweils durch Pfade mit einem anderen der Zustände verbunden sind, wobei den Pfaden Übergangswahrscheinlichkeiten zugewiesen sind, welche insbesondere durch statistische Analyse von Trainingsdaten erhalten wurden, wobei die Trainingsdaten beobachtete Einzelkanal-Objekterkennungsergebnissequenzen und annotierte Mehrkanal-Objekterkennungsergebnissen umfassen.

13. Das System nach Anspruch 11 oder 12, wobei das trainierte prädiktive Modell dazu konfiguriert ist, das Ergebnis der Mehrkanal-Objekterkennung als Funktion einer beobachteten Sequenz von Einzelkanal-Objekterkennungen zu berechnen, wobei die beobachtete Sequenz insbesondere mindestens 3, insbesondere mindestens 4, insbesondere mindestens 5 nacheinander erhaltenen Ergebnisse von Einkanal-Objekterkennungsergebnissen umfasst.

14. Das System nach Anspruch 12, wobei das prädiktive Modell durch Anwendung eines maschinellen Lernverfahrens auf Trainingsdaten gewonnen wurde, wobei die Trainingsdaten Sequenzen von beobachteten Trainings- Einzelkanal-Objekterkennungsergebnissen und annotierten Trainings-Mehrkanal-Objekterkennungsergebnissen umfassen und das Modell im Zuge des Trainings gelernt hat, Mehrkanalobjekterkennungs-Ergebnisse mit Sequenzen von Einkanal-Objekterkennungsergebnissen zu korrelieren, um ein Mehrkanal-Objekterkennungsergebnis als Funktion der Sequenz aufeinanderfolgender Einkanal- Objekterkennungsergebnisse der verschiedenen Frequenzen vorherzusagen;
wobei die Trainingsdaten insbesondere auch ein oder mehrere der folgenden, jeweils einem der Trainings-Einkanal-Objekterkennungsergebnis zugewiesenen Parameterwerte umfassen, wobei das Modell im Zuge des Trainings gelernt hat, Mehrkanalobjekterkennungs-Ergebnisse mit diesen Parameterwerten zu korrelieren, um ein Mehrkanal-Objekterkennungsergebnis als Funktion auch dieser Parameterwerte vorherzusagen:
∘ Amplitude des in einer Trainings-Einkanal-Objekterkennung ausgewerteten Ultraschallechos;
∘ Indikator eines Unterschieds der Amplitude des in einer Trainings-Einkanal- Objekterkennung ausgewerteten Ultraschallechos von der Amplitude der Ultraschallechos einer anderen der verschiedenen Frequenzen, wobei der Indikator insbesondere eine Differenz oder ein Verhältnis der Amplituden ist;
∘ Indikator eines Unterschieds der Amplitude des in einer Trainings-Einkanal- Objekterkennung ausgewerteten Ultraschallechos von der Amplitude eines Bodenechos, wobei der Indikator insbesondere eine Differenz oder ein Verhältnis der Amplituden ist.

15. System nach einem der vorigen Ansprüche, wobei die Ultraschallechos der mehreren unterschiedlichen Frequenzen frequenzmoduliert sind und das Modulationsmuster der verschiedenen Frequenzen unterschiedlich ist, wobei die Auswerteeinheit dazu konfiguriert ist, die Unterschiede in der Frequenzmodulation zur Unterscheidung der zu den verschiedenen Frequenzen gehörenden Echos zu verwenden, wobei insbesondere die Echos einer der Frequenzen zu einem Ultraschallsignal korrespondiert, welches mit ansteigender Frequenz während des Bursts gesendet wird (Chirp-Up), und die Echos einer weiteren der Frequenzen zu einem Ultraschallsignal korrespondiert, welches mit absteigender Frequenz während des Bursts gesendet wird (Chirp-down).

16. Verfahren zur ultraschallbasierten Objekterkennung, umfassend:
für jede von mehreren unterschiedlichen Frequenzen, Durchführung des folgenden Verfahrens, wobei für mehrere Zyklen die mehreren Frequenzen zyklisch alternierend gemäß einem vordefinierten Schema verwendet werden und das Verfahren in jedem dieser mehreren Zyklen für die jeweils verwendete Frequenz wiederholt wird:
- Empfang (902) von Ultraschallechos der Frequenz durch einen oder mehrere Ultraschallempfänger (106, 110, 404);
- Durchführung (904) einer Einkanal-Objekterkennung durch eine Auswerteeinheit (104), wobei eine Einkanal-Objekterkennung eine Analyse des Ultraschallechos der einen Frequenz zur Erkennung eines Objekts (102) umfasst,
- Durchführung (906) einer Mehrkanal-Objekterkennung in jedem von mehreren der Zyklen durch die Auswerteeinheit, wobei eine Mehrkanal-Objekterkennung eine Analyse der Ergebnisse der aktuell durchgeführten Einkanal-Objekterkennung und mindestens einer weiteren in der Vergangenheit durchgeführten Einkanal-Objekterkennung im Ultraschallecho einer anderen der mehreren Frequenzen mit dem Ziel der Erkennung des Objekts ist, und
- Ausgabe (908) eines Ergebnisses der Mehrkanal-Objekterkennung als das Ergebnis der ultraschallbasierten Objekterkennung des aktuellen Zyklus,
wobei die mehreren verschiedenen Frequenzen zumindest eine erste Frequenz und eine zweite Frequenz umfassen, wobei die erste Frequenz niedriger ist als die zweite Frequenz,
**dadurch gekennzeichnet, dass**
in der Mehrkanal-Objekterkennung eines aktuell ausgeführten Zyklus als Ergebnis zurückgegeben wird, dass das Objekt vorhanden ist, wenn über eine Mindestanzahl an bereits ausgeführten Zyklen hinweg, in welchen jeweils Ultraschallechos der ersten Frequenz analysiert wurden, das Objekt in der Einkanalobjekterkennung dieser Zyklen erkannt wurde, wobei dieses Ergebnis auch dann zurückgegeben wird, wenn im letzten Zyklus, in welchem Ultraschallechos der zweiten Frequenz analysiert wurden, das Objekt nicht erkannt wurde.

## Claims

1. A system (100, 200, 3000, 400, 500) for ultrasound-based object detection, comprising:
- a plurality of ultrasound receivers (106, 110, 404) configured to receive ultrasound echoes of at least two different frequencies;
- an evaluation unit (104) configured to:
- cyclically perform a single-channel object detection, wherein the single-channel object detection comprises an analysis of the ultrasound echo of one of the frequencies for detecting an object (102), wherein in the course of the single-channel object detection, the plurality of frequencies are used alternately according to a predefined scheme (700) for a plurality of the cycles; and
- perform a multi-channel object detection in each of a plurality of the cycles, once per cycle, wherein a multi-channel object detection is an analysis of the results of the currently performed single-channel object detection and at least one further single-channel object detection performed in the past in the ultrasound echo of another one of the plurality of frequencies with the aim of detecting the object, and to output the result of the multi-channel object detection as the result of the ultrasound-based object detection of the current cycle, wherein
the plurality of different frequencies comprise at least a first frequency (F1) and a second frequency (F2), wherein the first frequency is lower than the second frequency,
**characterized in that** the evaluation unit is configured to return, in the multi-channel object detection of a currently executed cycle, as a result that the object is present if, over a minimum number of already executed cycles in which ultrasound echoes of the first frequency were respectively analyzed, the object was detected in the single-channel object detection of these cycles, wherein this result is also returned if the object was not detected in the last cycle in which ultrasound echoes of the second frequency were analyzed.

2. System according to claim 1, further comprising a plurality of ultrasound transmitters (108, 112, 406) configured to emit ultrasound signals (114, 116, 402) of a first of the plurality of frequencies and a second of the plurality of frequencies, wherein the ultrasound echoes result from a reflection of the ultrasound signals from the object.

3. System according to claim 2, wherein the plurality of ultrasound transmitters are each configured to emit ultrasound signals of a single specific one of the plurality of different frequencies.

4. System according to claim 2 or 3, wherein the plurality of ultrasound transmitters are configured to cyclically and alternately emit the ultrasound signals of different ones of the plurality of different frequencies, wherein per cycle only signals of one of the plurality of different frequencies are always emitted.

5. System according to any one of claims 2-4, further comprising a control unit, wherein the control unit is configured to alternately control the plurality of ultrasound transmitters during the plurality of cycles to transmit the ultrasound signals according to a transmission scheme, such that within one of the cycles preferably only ultrasound signals of a single one of the plurality of different frequencies are simultaneously emitted at any time, wherein the predefined scheme used for the analysis corresponds to the transmission scheme.

6. System according to any one of the preceding claims, wherein the single-channel object detection uses an algorithm for detecting an object (102) in an ultrasound echo, which is independent of the sound lobe dimensions of the plurality of different frequencies for each of the plurality of different frequencies.

7. System according to any one of the preceding claims, wherein the evaluation unit is configured to return, in the multi-channel object detection of a currently executed cycle, as a result that the object is not present if, over a minimum number of already executed cycles in which ultrasound echoes of the first frequency were respectively analyzed, the object was not detected in the single-channel object detection of these cycles, wherein this result is also returned if the object was detected in the last cycle in which ultrasound echoes of the second frequency were analyzed.

8. System according to any one of the preceding claims, wherein the evaluation unit is configured to perform one or more of the following actions depending on the result of the multi-channel object detection: - Selection of one of several available cross-cycle algorithms for spatial tracking of the object; - Display of the object if it was detected; - Output of a warning or alarm signal regarding the presence of the object; - Initiation of an automatic or semi-automatic driving maneuver to navigate around the object.

9. System according to any one of the preceding claims, wherein the single-channel object detection is performed as a function of the following input data: - Amplitude of the received ultrasound echo of the currently evaluated frequency; - Indicator of a difference in the amplitude of the ultrasound echoes of the currently evaluated frequency from the amplitude of the ultrasound echoes of another one of the different frequencies, wherein the indicator is in particular a difference or a ratio of the amplitudes; - Indicator of a difference in the amplitude of the ultrasound echoes of the currently evaluated frequency from the amplitude of a currently detected ground echo, wherein the indicator is in particular a difference or a ratio of the amplitudes.

10. System according to claim 8 or 9, wherein - the spatial tracking of the object in the case of the multi-channel object detection result "detected across channels" comprises a comparison of the position of the currently detected object with the position of the object determined in the immediately preceding executed cycle, in order to determine whether a distance of the position of the object determined in the immediately preceding executed cycle from the currently determined position of the object is below a threshold value; and/or - the spatial tracking of the object in the case of the multi-channel object detection result "detected only F1 single-channel-based" comprises: - Prediction of the future position of the object based on position data of the object detected during the analysis of the ultrasound echoes of the first frequency in the current and one or more previously executed cycles; - In the next cycle in which ultrasound signals of the first frequency are analyzed, comparison of the position data of the object obtained from the currently analyzed ultrasound echoes with the predicted position, in order to determine whether a distance of the predicted position of the object from the currently determined position of the object is below a threshold value; wherein the evaluation unit is configured to, if the position distance is below the threshold value, treat the object detected in the different cycles as an identical object, and otherwise return the existence of two different objects or a noise signal as the result of the tracking.

11. System according to any one of the preceding claims, wherein the evaluation unit uses a trained predictive model for performing the multi-channel object detection, wherein the trained predictive model is in particular a Markov chain (706, 800).

12. System according to claim 11, wherein the trained predictive model is the Markov chain (706, 800), wherein the Markov chain comprises the following states: - a state "object not detected in multi-channel object detection neither on the basis of the first (F1) nor the second frequency (F2)" (806); - a state "object detected in multi-channel object detection only on the basis of the first frequency (F1)" (808); - a state "object detected in multi-channel object detection only on the basis of the second frequency (F2)" (810); - a state "object detected in multi-channel object detection on the basis of both the first (F1) and the second frequency (F2)" (812), wherein the states are each connected by paths to another one of the states, wherein transition probabilities are assigned to the paths, which were obtained in particular by statistical analysis of training data, wherein the training data comprise observed single-channel object detection result sequences and annotated multi-channel object detection results.

13. The system according to claim 11 or 12, wherein the trained predictive model is configured to calculate the result of the multi-channel object detection as a function of an observed sequence of single-channel object detections, wherein the observed sequence comprises in particular at least 3, in particular at least 4, in particular at least 5 successively obtained results of single-channel object detection results.

14. The system according to claim 12, wherein the predictive model was obtained by applying a machine learning method to training data, wherein the training data comprise sequences of observed training single-channel object detection results and annotated training multi-channel object detection results, and the model has learned during training to correlate multi-channel object detection results with sequences of single-channel object detection results, in order to predict a multi-channel object detection result as a function of the sequence of successive single-channel object detection results of the different frequencies; wherein the training data in particular also comprise one or more of the following parameter values, each assigned to one of the training single-channel object detection results, wherein the model has learned during training to correlate multi-channel object detection results with these parameter values, in order to predict a multi-channel object detection result as a function of these parameter values as well: - Amplitude of the ultrasound echo evaluated in a training single-channel object detection; - Indicator of a difference in the amplitude of the ultrasound echo evaluated in a training single-channel object detection from the amplitude of the ultrasound echoes of another one of the different frequencies, wherein the indicator is in particular a difference or a ratio of the amplitudes; - Indicator of a difference in the amplitude of the ultrasound echo evaluated in a training single-channel object detection from the amplitude of a ground echo, wherein the indicator is in particular a difference or a ratio of the amplitudes.

15. System according to any one of the preceding claims, wherein the ultrasound echoes of the plurality of different frequencies are frequency-modulated and the modulation pattern of the different frequencies is different, wherein the evaluation unit is configured to use the differences in the frequency modulation to distinguish the echoes belonging to the different frequencies, wherein in particular the echoes of one of the frequencies correspond to an ultrasound signal that is transmitted with increasing frequency during the burst (chirp-up), and the echoes of another one of the frequencies correspond to an ultrasound signal that is transmitted with decreasing frequency during the burst (chirp-down).

16. Method for ultrasound-based object detection, comprising: for each of a plurality of different frequencies, performing the following method, wherein for a plurality of cycles the plurality of frequencies are used cyclically and alternately according to a predefined scheme and the method is repeated in each of these plurality of cycles for the respectively used frequency: - Receiving (902) ultrasound echoes of the frequency by one or more ultrasound receivers (106, 110, 404); - Performing (904) a single-channel object detection by an evaluation unit (104), wherein a single-channel object detection comprises an analysis of the ultrasound echo of the one frequency for detecting an object (102), - Performing (906) a multi-channel object detection in each of a plurality of the cycles by the evaluation unit, wherein a multi-channel object detection is an analysis of the results of the currently performed single-channel object detection and at least one further single-channel object detection performed in the past in the ultrasound echo of another one of the plurality of frequencies with the aim of detecting the object, and outputting (908) a result of the multi-channel object detection as the result of the ultrasound-based object detection of the current cycle, wherein the plurality of different frequencies comprise at least a first frequency and a second frequency, wherein the first frequency is lower than the second frequency, **characterized in that** in the multi-channel object detection of a currently executed cycle, the result returned is that the object is present if, over a minimum number of already executed cycles in which ultrasound echoes of the first frequency were respectively analyzed, the object was detected in the single-channel object detection of these cycles, wherein this result is also returned if the object was not detected in the last cycle in which ultrasound echoes of the second frequency were analyzed.

## Revendications

1. Un système (100, 200, 3000, 400, 500) pour la détection d'objets par ultrasons, comprenant :
- plusieurs récepteurs ultrasoniques (106, 110, 404), configurés pour recevoir des échos ultrasoniques d'au moins deux fréquences différentes ;
- une unité d'évaluation (104), configurée pour :
- effectuer de manière cyclique une détection d'objet monocanal, la détection d'objet monocanal comprenant une analyse de l'écho ultrasonique d'une des fréquences pour la détection d'un objet (102), plusieurs fréquences étant utilisées alternativement selon un schéma prédéfini (700) pour plusieurs des cycles au cours de la détection d'objet monocanal ; et
- effectuer, dans plusieurs des cycles, une détection d'objet multicanal par cycle, une détection d'objet multicanal étant une analyse des résultats de la détection d'objet monocanal actuellement effectuée et d'au moins une autre détection d'objet monocanal effectuée dans le passé dans l'écho ultrasonique d'une autre des plusieurs fréquences dans le but de détecter l'objet, et délivrer le résultat de la détection d'objet multicanal comme résultat de la détection d'objet par ultrasons du cycle actuel, dans lequel
les plusieurs fréquences différentes comprennent au moins une première fréquence (F1) et une deuxième fréquence (F2), la première fréquence étant inférieure à la deuxième fréquence,
**caractérisé en ce que** l'unité d'évaluation est configurée pour retourner, dans la détection d'objet multicanal d'un cycle actuellement exécuté, comme résultat que l'objet est présent, lorsque, sur un nombre minimum de cycles déjà exécutés dans lesquels des échos ultrasoniques de la première fréquence ont été analysés respectivement, l'objet a été détecté dans la détection d'objet monocanal de ces cycles, ce résultat étant également retourné lorsque, dans le dernier cycle dans lequel des échos ultrasoniques de la deuxième fréquence ont été analysés, l'objet n'a pas été détecté.

2. Système selon la revendication 1, comprenant en outre plusieurs émetteurs ultrasoniques (108, 112, 406), configurés pour émettre des signaux ultrasoniques (114, 116, 402) d'une première des plusieurs fréquences et d'une deuxième des plusieurs fréquences, les échos ultrasoniques résultant d'une réflexion des signaux ultrasoniques sur l'objet.

3. Système selon la revendication 2, dans lequel les plusieurs émetteurs ultrasoniques sont chacun configurés pour émettre des signaux ultrasoniques d'une seule fréquence spécifique parmi les plusieurs fréquences différentes.

4. Système selon la revendication 2 ou 3, dans lequel les plusieurs émetteurs ultrasoniques sont configurés pour émettre de manière cyclique et alternée les signaux ultrasoniques de différentes fréquences parmi les plusieurs fréquences différentes, seuls des signaux d'une des plusieurs fréquences différentes étant toujours émis à chaque cycle.

5. Système selon l'une des revendications 2 à 4, comprenant en outre une unité de contrôle, l'unité de contrôle étant configurée pour commander les plusieurs émetteurs ultrasoniques alternativement au cours des plusieurs cycles pour émettre les signaux ultrasoniques selon un schéma d'émission, de sorte qu'au sein d'un des cycles, de préférence seuls des signaux ultrasoniques d'une seule des plusieurs fréquences différentes sont émis simultanément à tout moment, le schéma prédéfini utilisé pour l'analyse correspondant au schéma d'émission.

6. Système selon l'une des revendications précédentes, dans lequel la détection d'objet monocanal utilise un algorithme pour la détection d'un objet (102) dans un écho ultrasonique, qui est indépendant des dimensions du lobe acoustique des plusieurs fréquences différentes pour chacune des plusieurs fréquences différentes.

7. Système selon l'une des revendications précédentes, dans lequel l'unité d'évaluation est configurée pour retourner, dans la détection d'objet multicanal d'un cycle actuellement exécuté, comme résultat que l'objet n'est pas présent, lorsque, sur un nombre minimum de cycles déjà exécutés dans lesquels des échos ultrasoniques de la première fréquence ont été analysés respectivement, l'objet n'a pas été détecté dans la détection d'objet monocanal de ces cycles, ce résultat étant également retourné lorsque, dans le dernier cycle dans lequel des échos ultrasoniques de la deuxième fréquence ont été analysés, l'objet a été détecté.

8. Système selon l'une des revendications précédentes, dans lequel l'unité d'évaluation est configurée pour exécuter une ou plusieurs des actions suivantes en fonction du résultat de la détection d'objet multicanal : - Sélection d'un parmi plusieurs algorithmes disponibles, inter-cycles, pour le suivi spatial de l'objet ; - Affichage de l'objet s'il a été détecté ; - Émission d'un avertissement ou d'un signal d'alarme concernant la présence de l'objet ; - Initiation d'une manœuvre de conduite automatique ou semi-automatique pour contourner l'objet.

9. Système selon l'une des revendications précédentes, dans lequel la détection d'objet monocanal est effectuée en fonction des données d'entrée suivantes : - Amplitude de l'écho ultrasonique reçu de la fréquence actuellement évaluée ; - Indicateur d'une différence de l'amplitude des échos ultrasoniques de la fréquence actuellement évaluée par rapport à l'amplitude des échos ultrasoniques d'une autre des différentes fréquences, l'indicateur étant notamment une différence ou un rapport des amplitudes ; - Indicateur d'une différence de l'amplitude des échos ultrasoniques de la fréquence actuellement évaluée par rapport à l'amplitude d'un écho de sol actuellement détecté, l'indicateur étant notamment une différence ou un rapport des amplitudes.

10. Système selon la revendication 8 ou 9, dans lequel - le suivi spatial de l'objet dans le cas du résultat de détection d'objet multicanal « détecté sur plusieurs canaux » comprend une comparaison de la position de l'objet actuellement détecté avec la position de l'objet déterminée dans le cycle immédiatement précédent, afin de déterminer si une distance entre la position de l'objet déterminée dans le cycle immédiatement précédent et la position actuellement déterminée de l'objet est inférieure à une valeur limite ; et/ou - le suivi spatial de l'objet dans le cas du résultat de détection d'objet multicanal « détecté uniquement sur la base du monocanal F1 » comprend : - Prédiction de la position future de l'objet sur la base des données de position de l'objet détectées lors de l'analyse des échos ultrasoniques de la première fréquence dans le cycle actuel et dans un ou plusieurs cycles précédemment exécutés ; - Dans le cycle suivant dans lequel des signaux ultrasoniques de la première fréquence sont analysés, comparaison des données de position de l'objet obtenues à partir des échos ultrasoniques actuellement analysés avec la position prédite, afin de déterminer si une distance entre la position prédite de l'objet et la position actuellement déterminée de l'objet est inférieure à une valeur limite ; l'unité d'évaluation étant configurée pour, si la distance de position est inférieure à la valeur limite, traiter l'objet détecté dans les différents cycles comme un objet identique, et sinon retourner l'existence de deux objets différents ou un signal de bruit comme résultat du suivi.

11. Système selon l'une des revendications précédentes, dans lequel l'unité d'évaluation utilise un modèle prédictif entraîné pour effectuer la détection d'objet multicanal, le modèle prédictif entraîné étant notamment une chaîne de Markov (706, 800).

12. Système selon la revendication 11, dans lequel le modèle prédictif entraîné est la chaîne de Markov (706, 800), la chaîne de Markov comprenant les états suivants : - un état « objet non détecté dans la détection d'objet multicanal ni sur la base de la première (F1) ni de la deuxième fréquence (F2) » (806) ; - un état « objet détecté dans la détection d'objet multicanal uniquement sur la base de la première fréquence (F1) » (808) ; - un état « objet détecté dans la détection d'objet multicanal uniquement sur la base de la deuxième fréquence (F2) » (810) ; - un état « objet détecté dans la détection d'objet multicanal à la fois sur la base de la première (F1) et de la deuxième fréquence (F2) » (812), les états étant respectivement reliés par des chemins à un autre des états, des probabilités de transition étant attribuées aux chemins, obtenues notamment par analyse statistique de données d'entraînement, les données d'entraînement comprenant des séquences de résultats de détection d'objet monocanal observées et des résultats de détection d'objet multicanal annotés.

13. Système selon la revendication 11 ou 12, dans lequel le modèle prédictif entraîné est configuré pour calculer le résultat de la détection d'objet multicanal en fonction d'une séquence observée de détections d'objet monocanal, la séquence observée comprenant notamment au moins 3, en particulier au moins 4, en particulier au moins 5 résultats de détections d'objet monocanal obtenus successivement.

14. Système selon la revendication 12, dans lequel le modèle prédictif a été obtenu par application d'une méthode d'apprentissage automatique à des données d'entraînement, les données d'entraînement comprenant des séquences de résultats de détection d'objet monocanal d'entraînement observés et de résultats de détection d'objet multicanal d'entraînement annotés, et le modèle ayant appris au cours de l'entraînement à corréler des résultats de détection d'objet multicanal avec des séquences de résultats de détection d'objet monocanal, afin de prédire un résultat de détection d'objet multicanal en fonction de la séquence de résultats de détection d'objet monocanal successifs des différentes fréquences ; les données d'entraînement comprenant notamment également une ou plusieurs des valeurs de paramètres suivantes, chacune attribuée à l'un des résultats de détection d'objet monocanal d'entraînement, le modèle ayant appris au cours de l'entraînement à corréler des résultats de détection d'objet multicanal avec ces valeurs de paramètres, afin de prédire un résultat de détection d'objet multicanal également en fonction de ces valeurs de paramètres : - Amplitude de l'écho ultrasonique évalué dans une détection d'objet monocanal d'entraînement ; - Indicateur d'une différence de l'amplitude de l'écho ultrasonique évalué dans une détection d'objet monocanal d'entraînement par rapport à l'amplitude des échos ultrasoniques d'une autre des différentes fréquences, l'indicateur étant notamment une différence ou un rapport des amplitudes ; - Indicateur d'une différence de l'amplitude de l'écho ultrasonique évalué dans une détection d'objet monocanal d'entraînement par rapport à l'amplitude d'un écho de sol, l'indicateur étant notamment une différence ou un rapport des amplitudes.

15. Système selon l'une des revendications précédentes, dans lequel les échos ultrasoniques des plusieurs fréquences différentes sont modulés en fréquence et le schéma de modulation des différentes fréquences est différent, l'unité d'évaluation étant configurée pour utiliser les différences de modulation de fréquence pour distinguer les échos appartenant aux différentes fréquences, les échos d'une des fréquences correspondant notamment à un signal ultrasonique émis avec une fréquence croissante pendant la salve (Chirp-Up), et les échos d'une autre des fréquences correspondant à un signal ultrasonique émis avec une fréquence décroissante pendant la salve (Chirp-down).

16. Procédé de détection d'objet par ultrasons, comprenant : pour chacune de plusieurs fréquences différentes, l'exécution du procédé suivant, plusieurs fréquences étant utilisées de manière cyclique et alternée selon un schéma prédéfini pour plusieurs cycles et le procédé étant répété dans chacun de ces plusieurs cycles pour la fréquence respectivement utilisée : - Réception (902) d'échos ultrasoniques de la fréquence par un ou plusieurs récepteurs ultrasoniques (106, 110, 404) ; - Exécution (904) d'une détection d'objet monocanal par une unité d'évaluation (104), une détection d'objet monocanal comprenant une analyse de l'écho ultrasonique de la fréquence en question pour la détection d'un objet (102), - Exécution (906) d'une détection d'objet multicanal dans chacun de plusieurs des cycles par l'unité d'évaluation, une détection d'objet multicanal étant une analyse des résultats de la détection d'objet monocanal actuellement effectuée et d'au moins une autre détection d'objet monocanal effectuée dans le passé dans l'écho ultrasonique d'une autre des plusieurs fréquences dans le but de détecter l'objet, et délivrance (908) d'un résultat de la détection d'objet multicanal comme résultat de la détection d'objet par ultrasons du cycle actuel, les plusieurs fréquences différentes comprenant au moins une première fréquence et une deuxième fréquence, la première fréquence étant inférieure à la deuxième fréquence, **caractérisé en ce que** dans la détection d'objet multicanal d'un cycle actuellement exécuté, il est retourné comme résultat que l'objet est présent, lorsque, sur un nombre minimum de cycles déjà exécutés dans lesquels des échos ultrasoniques de la première fréquence ont été analysés respectivement, l'objet a été détecté dans la détection d'objet monocanal de ces cycles, ce résultat étant également retourné lorsque, dans le dernier cycle dans lequel des échos ultrasoniques de la deuxième fréquence ont été analysés, l'objet n'a pas été détecté.
